# EUROPEAN PATENT APPLICATION

(11) **EP 4 722 593 A1**
(43) Date of publication of application: **08.04.2026**
(21) Application number: 25201507.8
(22) Date of filing: 10.09.2025
(51) Int. Cl.: F23R 3/14, F23R 3/28, F23R 3/36

(54) **GAS TURBINE ENGINE AND FUEL NOZZLE ASSEMBLY THEREFOR**

(30) Priority: 01.10.2024 US 202418903483
(71) Applicant: General Electric Company, Cincinnati, Ohio 45215 (US)
(72) Inventor: BENJAMIN, Michael, Evendale, 45241 (US); NATH, Hiranya Kumar, 560066 Bengaluru (IN); VISE, Steven, West Chester, 45069 (US)
(74) Representative: Openshaw & Co.

(57) **Abstract**

A gas turbine engine (10), comprising: a compressor section (12), a combustion section (14), and a turbine section (16) in a serial flow arrangement, with the combustion section (14) comprising: a combustor liner (40) that at least partially defines a combustion chamber (50); and a fuel nozzle assembly (248, 448, 648), comprising: a liquid fuel supply (34) to supply a liquid fuel; a hydrogen fuel supply (36) to supply a gaseous hydrogen fuel; and a fuel nozzle body (249, 449, 649) defining a fuel nozzle centerline, the fuel nozzle body (249, 449, 649) fluidly coupled with the liquid fuel supply (34) and the hydrogen fuel supply (36) to provide the liquid fuel and the gaseous hydrogen fuel to the combustion chamber (50).

## Description

### TECHNICAL FIELD

The present subject matter relates generally to a gas turbine engine having a fuel nozzle assembly.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbonbased fuels.

### BRIEF DESCRIPTION OF THE DRAWINGS

In the drawings:
FIG. 1 is a schematic view of a gas turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a schematic cross-sectional view illustrating portions of a fuel nozzle assembly coupled to a combustion chamber in accordance with various aspects described herein.
FIG. 3A is a schematic cross-sectional view illustrating portions of a fuel nozzle body including portions of a first fuel conduit and a second fuel conduit in accordance with various aspects described herein.
FIG. 4 is a schematic cross-sectional view illustrating portions of a fuel nozzle assembly coupled to a combustion chamber in accordance with various aspects described herein.
FIG. 5 is a schematic cross-sectional view illustrating portions of a fuel nozzle assembly coupled to a combustion chamber in accordance with various aspects described herein.
FIG. 6 is a schematic cross-sectional view illustrating portions of a fuel nozzle assembly coupled to a combustion chamber in accordance with various aspects described herein.
FIG. 7 is a schematic cross-sectional view illustrating portions of a fuel nozzle assembly coupled to a combustion chamber in accordance with various aspects described herein.
FIG. 8 is a schematic cross-sectional view illustrating an outer wall of a fuel nozzle assembly, viewed from aft, in accordance with various aspects described herein.
FIG. 9 is a schematic cross-sectional view illustrating portions of a fuel nozzle assembly coupled to a combustion chamber in accordance with various aspects described herein.
FIG. 10 is a schematic cross-sectional view illustrating portions of a fuel nozzle assembly coupled to a combustion chamber in accordance with various aspects described herein.
FIG. 11 is a schematic cross-sectional view illustrating portions of a fuel nozzle assembly coupled to a combustion chamber in accordance with various aspects described herein.
FIG. 12 is a schematic cross-sectional view illustrating portions of a fuel nozzle assembly coupled to a combustion chamber in accordance with various aspects described herein.
FIG. 13 is a schematic cross-sectional view illustrating portions of a fuel nozzle assembly coupled to a combustion chamber in accordance with various aspects described herein.
FIG. 14 is a schematic cross-sectional view illustrating portions of a fuel nozzle assembly coupled to a combustion chamber in accordance with various aspects described herein.
FIG. 15 is a schematic cross-sectional view illustrating portions of a fuel nozzle assembly coupled to a combustion chamber in accordance with various aspects described herein.
FIG. 16 is a schematic cross-sectional view illustrating portions of a fuel nozzle assembly coupled to a combustion chamber in accordance with various aspects described herein.
FIG. 17 is a schematic cross-sectional view illustrating portions of a fuel nozzle assembly coupled to a combustion chamber in accordance with various aspects described herein.
FIG. 18 is a flow diagram generally illustrating a method of operating a gas turbine engine in accordance with various aspects described herein.

### DETAILED DESCRIPTION

Aspects of the disclosure described herein are directed to a combustor. With some aspects, the disclosed combustors and fuel nozzle assemblies can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of flashback and flameholding (e.g., in a nozzle or mixer), and increase the impact of controlling the flame and limiting flame spread by controlling the dispersion of the gaseous fuel.

Many other possible aspects and configurations in addition to those shown in the included figures are contemplated by the present disclosure. The disclosed fuel nozzles can be utilized efficiently with multiple fuels, such as liquid fuel (e.g., Jet-A) and gaseous fuel (e.g., hydrogen gas). The fuels can be emitted by the fuel nozzles at the same time or at separate times. The disclosed fuel nozzles can provide greater flame stability, lower flame temperatures, reduced flashback, reduced flameholding, and lower NOₓ emissions relative to other designs. Distributed fuel injection from the disclosed fuel nozzles, such as radially distributed fuel injection, axially distributed fuel injection, or both, can promote combustion stability, lower NOₓ emissions, and increased durability. Limiting flashback and flameholding can allow for use of more reactive fuels, such as hydrogen, facilitate the use of more reactive fuels by limiting wear to engine components, or both. Increased mixing times can provide more uniform temperature distribution and lower maximum temperatures, which can limit NOₓ emissions.

Utilizing only hydrogen fuel during certain phases of a flight, such as approach, can limit coking by purging unburnt liquid fuel from the combustion section. Utilizing only hydrogen fuel during certain phases of a flight, such as cruise and approach, can result in zero carbon emissions (e.g., zero carbon dioxide). Utilizing hydrogen fuel can reduce the length of the combustor as mixing times can be reduced. Utilizing only hydrogen fuel at low power can limit or prevent smoke. Utilizing liquid fuel during at least some phases of a flight, such as takeoff and climb, can limit temperatures to improve durability and limit NOₓ emissions.

For purposes of illustration, the present disclosure will be described with respect to a turbine engine. It will be understood, however, that aspects of the disclosure described herein are not so limited. A combustor as described herein can be implemented in various engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

With the combustors and fuel nozzle assemblies described herein, gaseous hydrogen fuel can be used without the need of diluents. In some embodiments, no diluent is added to the combustion chamber and the fuel is substantially completely diatomic hydrogen without diluent. As used herein, the term "substantially completely," as used to describe the amount of a particular element or molecule (e.g., diatomic hydrogen), refers to at least 99% by mass of the described portion of the element or molecule, such as at least 97.5%, such as at least 95%, such as at least 92.5%, such as at least 90%, such as at least 85%, or such as at least 75% by mass of the described portion of the element or molecule. In some examples, the fuel is entirely (e.g., 100%) hydrogen by mass.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third," etc. may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

The term "nozzle" has been used in various ways in the context of gas turbine engines. In the instant application, "nozzle" refers to a component having a portion for fluid coupling to a fuel supply and having at least one portion for fluidly coupling with a combustor portion, a combustor liner, a combustion chamber, or combinations thereof.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only, and the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example, and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is a descriptor for locating parts described herein. Further, the term "proximate" means nearer or closer to the part recited than the following part. For example, a first aperture proximate a wall, the first aperture located upstream from a second aperture means that the first aperture is closer to the wall than the first aperture is to the second aperture.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

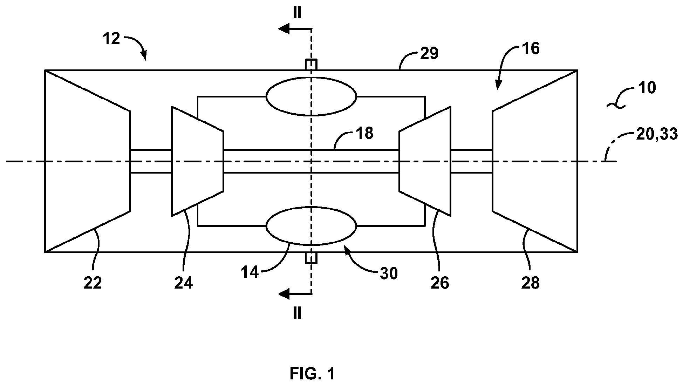

FIG. 1 is a schematic view of a gas turbine engine 10. As a non-limiting example, the gas turbine engine 10 can be used within an aircraft. The gas turbine engine 10 can include, at least, a compressor section 12, a combustion section 14, and a turbine section 16 in a serial flow arrangement. A drive shaft 18 rotationally couples the compressor section 12 and the turbine section 16, such that rotation of one affects the rotation of the other and defines a rotational axis 20 for the gas turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft and an HP drive shaft. The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a shroud or casing, which can extend circumferentially about and enshroud one or more sections of the gas turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the shroud or casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14. The combustion section 14 can include a combustor 30.

During operation of the gas turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the gas turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the gas turbine engine 10.

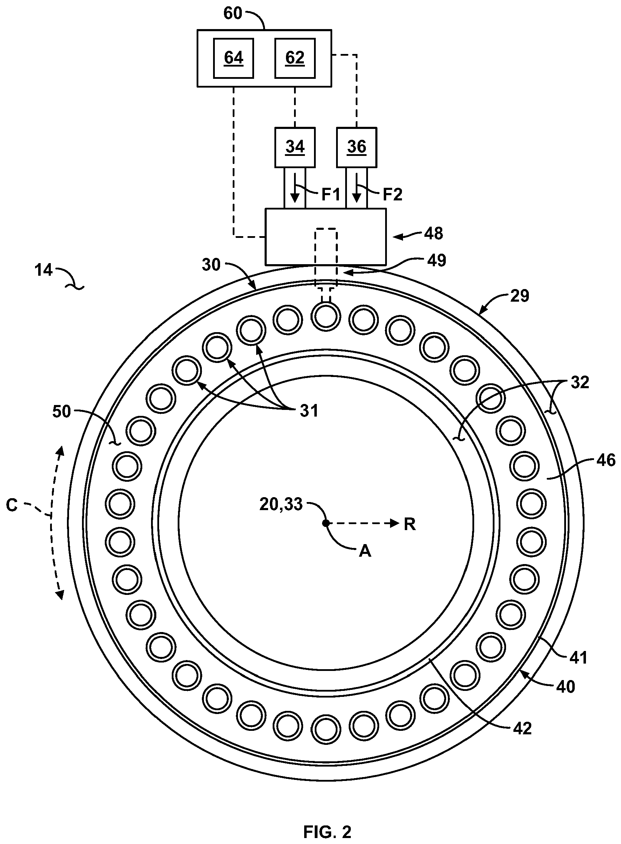

FIG. 2 depicts a cross-sectional view of the combustion section 14 along line II-II of FIG. 1. The combustion section 14 can include the combustor 30 with an annular arrangement of combustor portions 31 disposed around the centerline or rotational axis 20 of the gas turbine engine 10 (e.g., circumferentially spaced from each other in an annular configuration) (FIG. 1). The combustor portions 31 can, in some configurations, include or be configured as combustor cups, fuel cups, or nozzle cups. A fuel nozzle assembly 48 can be connected to each combustor portion 31. The combustor 30 can have a can, can-annular, or annular arrangement depending on the type of engine in which the combustor 30 is located. In a non-limiting example, the combustor 30 can have a combination arrangement located with a shroud or casing 29 of the gas turbine engine 10 (FIG. 1). The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a wall 46 (e.g., a dome wall) may be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or be fluidly coupled to a first fuel supply 34 (e.g., a first fuel manifold or conduit) that supplies a first fuel F1, a second fuel supply 36 (e.g., a second fuel manifold or circuit) that supplies a second fuel F2, or both. The fuel nozzle assembly 48 fluidly couples the first fuel supply 34 and the second fuel supply 36 with one of the combustor portions 31 and the combustion chamber 50, such as to provide the first fuel F1, the second fuel F2, or both to the combustion chamber 50. The fuel nozzle assembly 48 can include a fuel nozzle body 49 and can be coupled to the wall 46. The first fuel F1 and the second fuel F2 can include any suitable fuel, including liquid fuel, such as Jet-A, or gaseous fuel, such as hydrogen fuel, in non-limiting examples, which can include 100% H₂ (e.g., without diluents). In some examples, the first fuel F1 can include liquid fuel (e.g., atomized liquid fuel, such as Jet-A) and the second fuel can include gaseous fuel, such as hydrogen gas. For example, the fuel nozzle assembly 48 can be a multi-fuel nozzle assembly, a liquid and gaseous fuel nozzle assembly, or a liquid and gaseous hydrogen fuel nozzle assembly. Additionally or alternatively, the first fuel supply 34 can be a liquid fuel supply and the second fuel supply can be a hydrogen fuel supply. The combustor portions 31 can be arranged in an annular configuration about the rotational axis 20. The combustor portions 31 can be disposed at a radial distance from the rotational axis 20 that is greater than a radial distance of the inner liner 42 and less than a radial distance of the outer liner 41. A controller 60 can be connected to and at least partially control operation of the first fuel supply 34, the second fuel supply 36, the fuel nozzle assembly 48, or combinations thereof. The controller 60 can include a processor 62 and a memory 64. A combustion section centerline 33 of the combustion section 14 can be concentric with the rotational axis 20. The combustion section centerline 33 can define a radial direction R, an axial direction A, and a circumferential direction C.

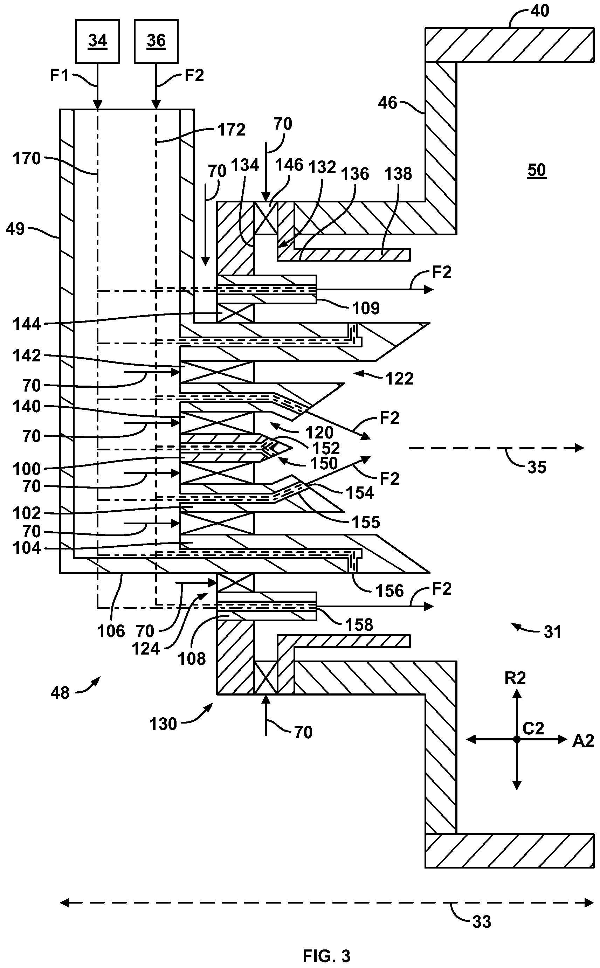

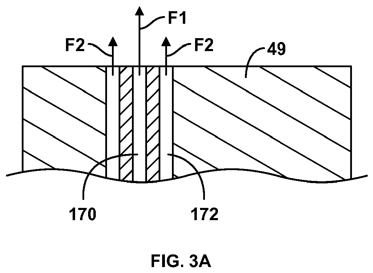

FIGS. 3, 4, and 5 are cross-sectional schematic views of an example of one of the combustor portions 31, which can include or be coupled with the fuel nozzle assembly 48 and can include portions of the combustor liner 40 and the wall 46. The fuel nozzle assembly 48 can include a fuel nozzle assembly centerline 35 that is parallel with and radially offset from the combustion section centerline 33. The fuel nozzle assembly centerline 35 can be collinear with a centerline of the combustor portion 31 to which the fuel nozzle assembly 48 is connected or incorporated with. The fuel nozzle assembly centerline 35 can define a second axial direction A2, a second radial direction R2 orthogonal to the second axial direction A2, and a second circumferential direction C2 about the second axial direction A2.

The fuel nozzle assembly 48 includes the fuel nozzle body 49, which can include a center body 100, a first inner wall 102 radially outward of the center body 100, and a body wall 104 radially outward of the first inner wall 102. The body wall 104 can include an outer surface 106 that is the exterior surface of at least some portions of the fuel nozzle body 49. The fuel nozzle assembly 48 can include an outer wall 108 mechanically coupled to and radially spaced from the outer surface 106. For example, the outer wall 108 can be mechanically coupled to the outer surface 106 via a swirler (e.g., a third swirler 144) disposed at least partially around the body wall 104, via one or more mounting posts extending radially outward from the body wall 104, or a combination thereof. The first inner wall 102, the body wall 104, and the outer wall 108 can be radially spaced annular walls and can be centered in an annular arrangement about the fuel nozzle assembly centerline 35. A first inner fluid passage 120 can be at least partially defined between the center body 100 and the first inner wall 102. A second inner fluid passage 122 can be at least partially defined between the first inner wall 102 and the body wall 104. A first outer fluid passage 124 can be at least partially defined between the outer surface 106 and the outer wall 108. With some examples, the first inner wall 102 can act as a first splitter (e.g., a pilot splitter) and the outer wall 108 can act as a second splitter. The first inner wall 102 can, in some configurations, include a converging-diverging configuration.

The fuel nozzle assembly 48 can include a mixer 130 coupled to the outer wall 108, the wall 46, or both. The mixer 130 and the outer wall 108 can at least partially define a second outer fluid passage 132. The second outer fluid passage 132 can include a radial portion 134 that extends in the second radial direction R2 and can include an axial portion 136 that extends in the second axial direction A2. For example, the second outer fluid passage 132 can be annular, and a cross-sectional shape of the second outer fluid passage 132 can include an L-shaped configuration. The mixer 130 can include a mixer wall 138 that extends in the second axial direction A2 radially outward of the outer wall 108 and radially inward of at least some portions of the wall 46. The second outer fluid passage 132 can be defined at least partially between the mixer wall 138 and the outer wall 108, between the mixer wall 138 and the outer surface 106, or both, as the mixer wall 138 can extend farther aft than the outer wall 108. The mixer wall 138 can extend axially aft beyond a trailing edge 109 of the outer wall 108.

The fuel nozzle assembly 48 can include a first swirler 140 in the first inner fluid passage 120, a second swirler 142 in the second inner fluid passage 122, a third swirler 144 in the first outer fluid passage 124, and a fourth swirler 146 in the second outer fluid passage 132. The first swirler 140, the second swirler 142, and the third swirler 144 can include axial swirlers that receive air 70, such as compressed air from the compressor section 12 (FIG. 1), moving aft in the second axial direction A2 and output swirling air 70 aft in the second axial direction A2 and having a tangential velocity component. The fourth swirler 146 can include a radial swirler that is configured to receive air 70 moving radially inward in the second radial direction R2 and output swirled air 70 radially inward such that the output swirled air 70 can impinge upon the outer wall 108 and turn from flowing radially inward to flowing aft in the second axial direction A2. For example, the fourth swirler 146 can be disposed in the radial portion 134 and can output swirling air 70 radially inward toward the outer wall 108.

The fuel nozzle assembly 48 can include a plurality of fuel orifices 150 fluidly coupled with the one or both of the first fuel supply 34 or the second fuel supply 36. The plurality of fuel orifices 150 can include one or more center body fuel orifices 152 of the center body 100, one or more first inner wall fuel orifices 154 of the first inner wall 102, one or more body wall fuel orifices 156 of the body wall 104, one or more outer wall fuel orifices 158 of the outer wall 108, or combinations thereof. The one or more center body fuel orifices 152 can be forward of (e.g., closer to a forward end of the gas turbine engine 10 of FIG. 1 than) some or all the other fuel orifices 150. The one or more body wall fuel orifices 156 can be aft of (e.g., closer to an aft end of the gas turbine engine 10 of FIG. 1 than) some or all of the other fuel orifices 150. The one or more first inner wall fuel orifices 154 and the one or more outer wall fuel orifices 158 can be axially offset, and can be axially between the one or more center body fuel orifices 152 and the one or more body wall fuel orifices 156. Axially offset fuel orifices, such as the fuel orifices 150, can allow for different mixing times of air 70 with fuel, such as the first fuel F1 and the second fuel F2, which can provide decreased emissions and increased flame stability. For example, fuel orifices disposed farther forward allow for increased mixing times, which can reduce NOₓ emissions, and fuel orifices disposed farther aft can reduce mixing times, which can increase flame stability. At least some of the plurality of fuel orifices 150, such as the one or more outer wall fuel orifices 158, can be fluidly coupled with both the first fuel supply 34 and the second fuel supply 36 to emit at least one of the first fuel F1 or the second fuel F2. Fluidly coupling fuel orifices, such as the one or more outer wall fuel orifices 158, with both of the first and second fuel supplies 34, 36 can allow the fuel nozzle assembly 48 to operate in a plurality of modes, such as to emit the first fuel F1 or the second fuel F2 from different locations during different operational conditions (e.g., flight conditions). Emitting fuel radially outward can facilitate more even distributions of fuel in the combustion chamber 50, which can limit NOₓ emissions.

The fuel nozzle assembly 48 can include a first fuel conduit 170 fluidly coupling the first fuel supply 34 with at least some of the fuel orifices 150 and can include a second fuel conduit 172 fluidly coupling the second fuel supply 36 with at least some of the fuel orifices 150. In some examples, the fuel conduits 170, 172 are included with the fuel supplies, 34, 36, respectively. The first fuel conduit 170 and the second fuel conduit 172 can include one or a combination of a pipe, a tube, or a passage formed in the fuel nozzle body 49, among other configurations. While the first fuel conduit 170 and the second fuel conduit 172 are shown separately in the fuel nozzle body 49 in FIG. 3, in some examples, such as generally illustrated in FIG. 3A, at least some portions of the first fuel conduit 170 and the second fuel conduit 172 can be disposed concentrically. For example, at least a portion of the first fuel conduit 170 can extend through the second fuel conduit 172 such that the second fuel F2 flows through the second fuel conduit 172 around the first fuel F1 flowing through the first fuel conduit 170 (e.g., a smaller diameter first tube disposed in a larger diameter second tube).

The fuel nozzle assembly 48 can emit various combinations of the first fuel F1 and the second fuel F2 into the combustion chamber 50 through various combinations of the fuel orifices 150. Referring to FIG. 3, for example, the fuel nozzle assembly 48 can operate with only the second fuel F2, which can include emitting the second fuel F2 through the one or more first inner wall fuel orifices 154 and emitting the second fuel F2 through the one or more outer wall fuel orifices 158. Emitting the second fuel F2 through the one or more first inner wall fuel orifices 154 can include emitting the second fuel F2 radially inward and aft (e.g., at an angle between the second axial direction A2 and the second radial direction R2). For example, at least a portion of a fuel passage 155 of the first inner wall 102 can be angled radially inward toward the fuel nozzle assembly centerline 35 to permit angled emission of the first fuel F1, the second fuel F2, or both. Emitting the second fuel F2 through the one or more outer wall fuel orifices 158 can include emitting the second fuel F2 aft in the second axial direction A2 (e.g., without a radial component).

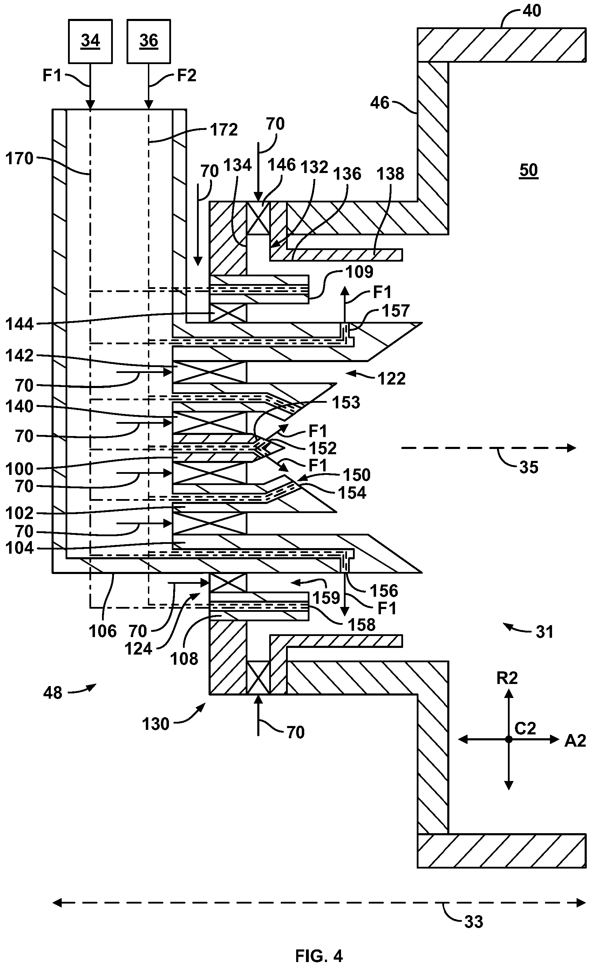

Referring to FIG. 4, the fuel nozzle assembly 48 can operate with only the first fuel F1, which can include emitting the first fuel F1 through the one or more center body fuel orifices 152 and emitting the first fuel F1 through the one or more body wall fuel orifices 156. Emitting the first fuel F1 through the one or more center body fuel orifices 152 can include emitting the first fuel F1 radially outward and aft. For example, at least a portion of a center body fuel passage 153 of the center body 104 can be angled radially outward relative to the fuel nozzle assembly centerline 35 to permit angled emission of the first fuel F1, the second fuel F2, or both. Emitting the first fuel F1 through the one or more body wall fuel orifices 156 can include emitting the first fuel F1 radially outward (e.g., parallel to the second radial direction R2, without an axial component). For example, at least a portion of a body wall fuel passage 157 can be angled radially outward relative to (e.g., perpendicular to) the fuel nozzle assembly centerline 35 to permit angled (e.g., directly radial) emission of the first fuel F1, the second fuel F2, or both. Emitting the first fuel F1 radially outward from the one or more body wall fuel orifices 156 can result in the first fuel F1 intersecting with air 70 flowing through or out of the first outer fluid passage 124, intersecting with air 70 flowing through or out of the second outer fluid passage 132, contacting the mixer wall 138, or combinations thereof, which can facilitate mixing. For example, the flow direction of the first fuel F1 emitted from the one or more body wall fuel orifices 156 can be perpendicular to the flow direction of air 70 in or from the first outer fluid passage 124 and the second outer fluid passage 132 (e.g., the emitted first fuel F1 can be in cross-flow with air 70). The one or more body wall fuel orifices 156 can, for example, be at or downstream of an outlet 159 of the first outer fluid passage 124. The outlet 159 can be defined at a trailing edge of the outer wall 108.

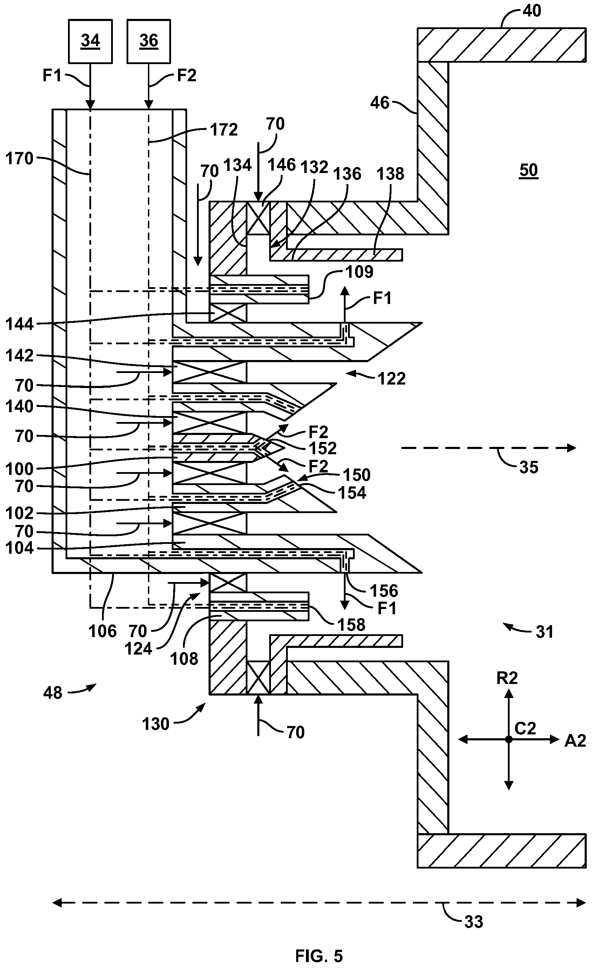

Referring to FIG. 5, the fuel nozzle assembly 48 can operate with both of the first fuel F1 and the second fuel F2, which can include emitting at least one of the first fuel F1 or the second fuel F2 through the one or more center body fuel orifices 152, the one or more first inner wall fuel orifices 154, the one or more body wall fuel orifices 156, the one or more outer wall fuel orifices 158, or combinations thereof. In some configurations, emitting the first fuel F1 and the second fuel F2 can include emitting the first fuel F1 through the one or more body wall fuel orifices 156 (e.g., as a main fuel) and emitting the second fuel F2 through the one or more center body fuel orifices 152 (e.g., as a pilot fuel).

In a first operating mode (e.g., a dual fuel mode), such as generally illustrated in FIG. 5, the fuel nozzle assembly 48 can emit the first fuel F1 and the second fuel F2 into the combustion chamber 50. For example, the fuel nozzle assembly 48 can emit the first fuel F1 through the one or more outer wall fuel orifices 158 of the outer wall 108 and can emit one or both of the first the second fuel F2 through the one or more center body fuel orifices 152. In some examples, the first fuel F1 and the second fuel F2 can be emitted through the center body fuel orifices 152.

In a second operating mode, such as generally illustrated in FIG. 3, the fuel nozzle assembly 48 can emit the second fuel F2 through the one or more first inner wall fuel orifices 154 of the first inner wall 102 and through the one or more outer wall fuel orifices 158 of the outer wall 108, such as without emitting the first fuel F1 into the combustion chamber 50.

In a third operating mode, such as generally illustrated in FIG. 4, the fuel nozzle assembly 48 can emit the first fuel F1 through the one or more center body fuel orifices 152 of the center body 100 and through the one or more outer wall fuel orifices 158 of the outer wall 108, such as without emitting the second fuel F2 into the combustion chamber 50.

With aircraft applications, the fuel nozzle assembly 48 can emit only the first fuel F1, only the second fuel F2, or both of the first fuel F1 and the second fuel F2, depending on aircraft operating conditions. For example, during ignition, taxiing, cruise, approach, and landing, the fuel nozzle assembly 48 can operate in the second operating mode and emit only the second fuel F2 (e.g., hydrogen), and during climb and takeoff, the fuel nozzle assembly 48 can operate in the third mode and emit only the first fuel F1 (e.g., liquid fuel). Emitting the second fuel F2 during approach and landing can limiting coking, as burning of the second fuel F2 can burn most or all of any unburnt liquid fuel (e.g., the first fuel F1). Air 70 flowing through the second outer fluid passage 132 can provide flame shaping in the combustion chamber 50, at least when fuel, such as the first fuel F1, is not being emitted from the one or more body wall fuel orifices 156. The flame shaping can, for example, limit the flow of fuel, such as the second fuel F2, toward the combustor liner 40, which can limit temperatures at the combustor liner 40, flashback, and flameholding. Additionally or alternatively, the flame shaping can limit fuel, such as the second fuel F2, at or near the wall 46, which can reduce temperatures at the wall 46, which can reduce the opportunity for flashback and flameholding. In some examples, the fuel nozzle assembly 48 can emit at least some of both of the first fuel F1 and the second fuel F2 during one or more of ignition, taxiing, cruise, climb, takeoff, approach, or landing.

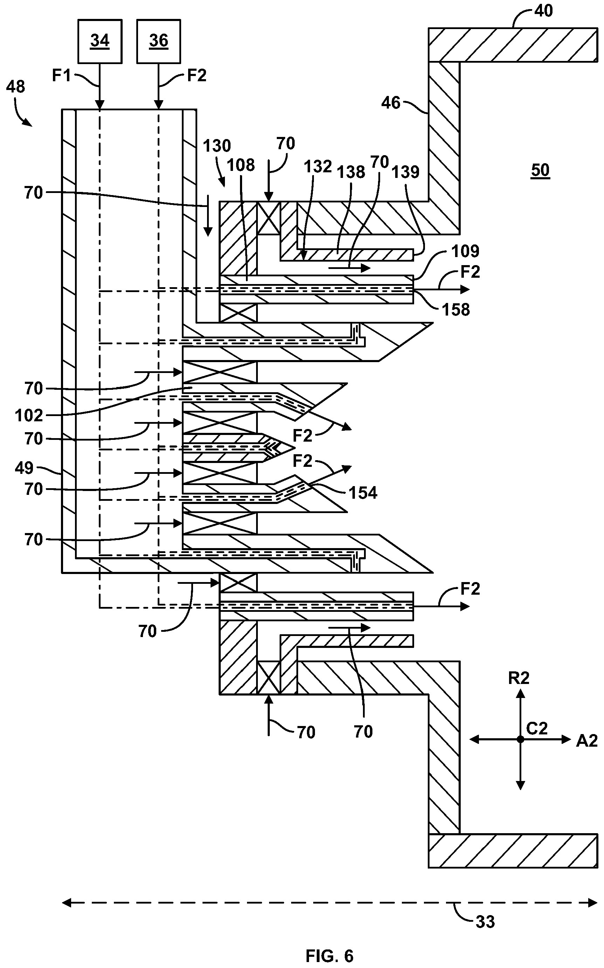

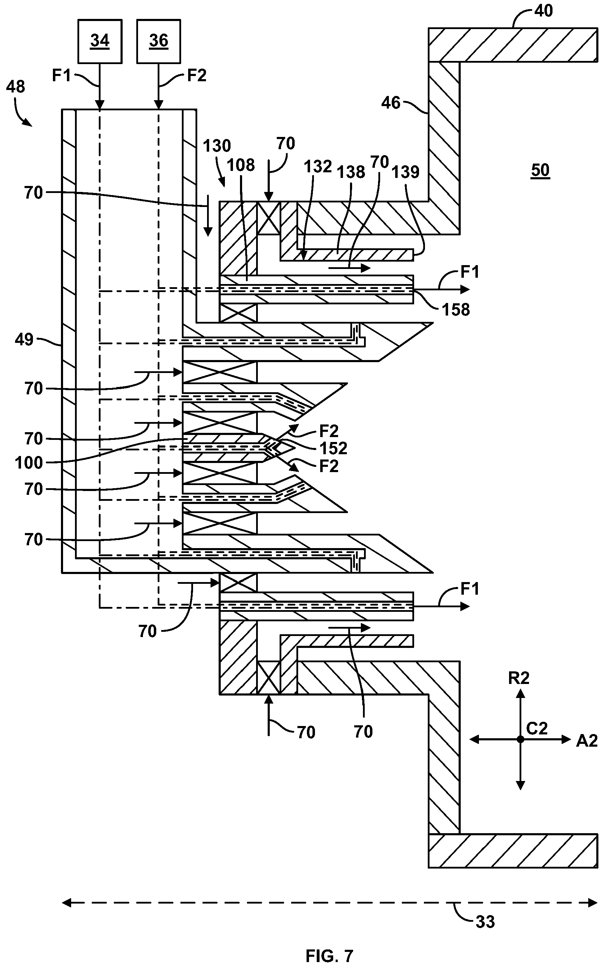

Referring to FIGS. 6 and 7, the outer wall 108 of the fuel nozzle body 49 of the fuel nozzle assembly 48 can extend axially aft such that the trailing edge 109 of the outer wall 108 and a trailing edge 139 of the mixer wall 138 of the mixer 130 are axially aligned relative to the fuel nozzle assembly centerline 35. With such a configuration, the one or more outer wall fuel orifices 158 can emit fuel, such as the first fuel F1 from the first fuel supply 34 , the second fuel F2 from the second fuel supply 36, or both, directly into the combustion chamber 50. Air 70 from the second outer fluid passage 132 can flow along the outer surface of the outer wall 108 to enter the combustion chamber 50 prior to mixing with fuel, which can provide flame shaping, such as to limit flames at or proximate the wall 46, the combustor liner 40, or both.

With some examples, a mixing length of the second fuel F2 emitted through the one or more center body fuel orifices 152 is approximately 0 inches (e.g., at the wall 46) to 1.5 inches or 0-38.1 mm. The mixing length can be measured from an aft surface of the wall 46 to the one or more center body fuel orifices 152.

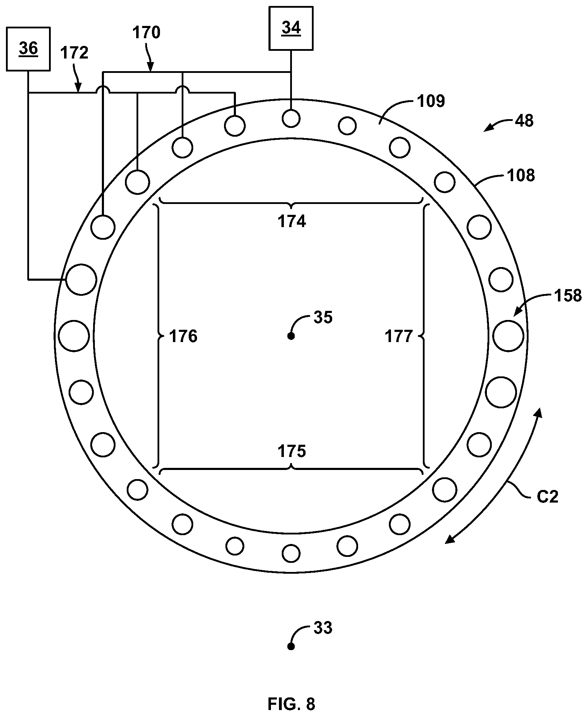

In some examples of the fuel nozzle assembly 48, such as generally illustrated in FIG. 8, the outer wall fuel orifices 158 can be circumferentially spaced from each other in an annular configuration at the trailing edge 109 of the outer wall 108. In some examples, the outer wall fuel orifices 158 can be arranged in an alternating pattern with some of the outer wall fuel orifices 158 being fluidly coupled with the first fuel supply 34, such as via the first fuel conduit 170, and the adjacent outer wall fuel orifices 158 being fluid coupled with the second fuel supply 36, such as via the second fuel conduit 172. The diameters of the outer wall fuel orifices 158 can vary in the second circumferential direction C2 relative to the fuel nozzle assembly centerline 35. In some examples, outer wall fuel orifices 158 with smaller diameters (e.g., 0.015 inches to 0.024 inches or 0.38 mm to 0.61 mm) can be disposed at a radially outer portion 174 and a radially inner portion 175 (e.g., relative to the combustion section centerline 33, toward the top and bottom of FIG. 8) of the outer wall 108, and outer wall fuel orifices 158 with larger diameters (e.g., 0.020 inches to 0.045 inches or 0.50 mm to 1.14 mm) can be disposed at circumferential sides 176, 177 (e.g., relative to the combustion section centerline 33, to the left and right of FIG. 8) of the outer wall 108. Such a configuration can provide relative lesser amounts of fuel, such as the second fuel F2, proximate the combustor liner 40 (FIG. 7), as the outer wall fuel orifices 158 with larger diameters can be farther from the combustor liner 40 (FIG. 7) than the outer wall fuel orifices 158 with smaller diameters, which limit temperatures at the combustor liner 40, flashback, flameholding, or combinations thereof.

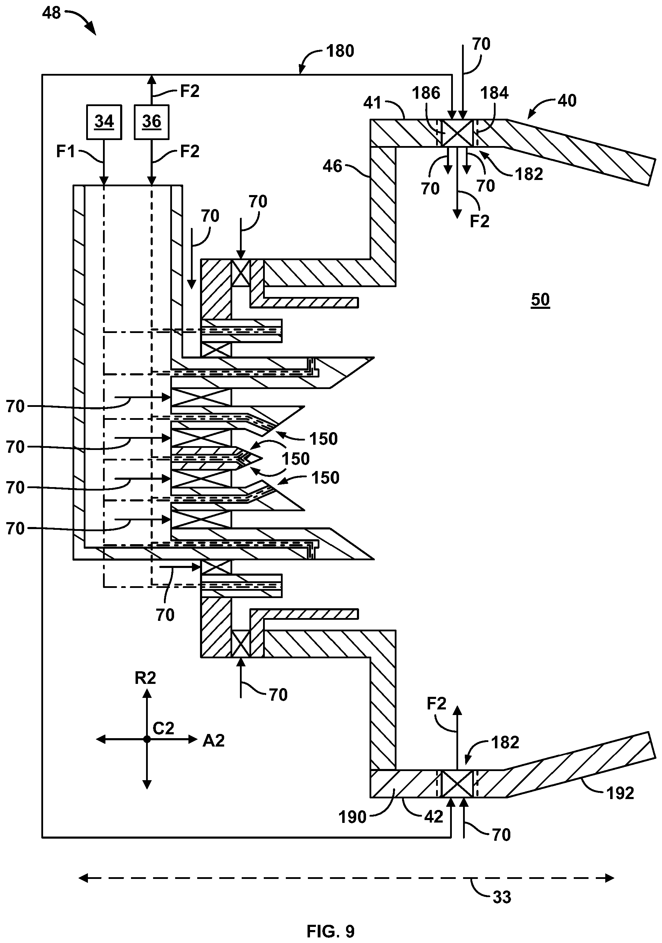

Referring to FIG. 9, with some examples, the fuel nozzle assembly 48 can include one or more liner fuel conduits 180 fluidly coupled with one or more liner fuel orifices 182 of the combustor liner 40. The one or more liner fuel conduits 180 can be fluidly coupled with the second fuel supply 36 to provide the second fuel F2 to the one or more liner fuel orifices 182. The one or more liner fuel orifices 182 can be aft of the wall 46 and can be directed radially inward, such as directly radially inward (e.g., perpendicular to the second axial direction A2), to emit the second fuel F2 into the combustion chamber 50 aft of the wall 46. The one or more liner fuel orifices 182 can includes a plurality of circumferentially spaced fuel orifices in an annular arrangement about the combustor liner 40. Emitting fuel, such as the second fuel F2, aft of the wall 46 via the one or more liner fuel orifices 182 can reduce residence time of the fuel in the combustion chamber 50, which can reduce combustion time and NOₓ emissions. In some examples, at least 30% and less than or equal to 80% of the second fuel F2 provided to the combustion chamber 50 via the fuel nozzle assembly 48 can be provided via the one or more liner fuel orifices 182. The remainder of the total supply of the second fuel F2 provided by the fuel nozzle assembly 48 to the combustion chamber 50 (e.g., 20%-70%) can be provided via the fuel orifices 150.

The fuel nozzle assembly 48 can further include one or more liner air orifices 184 extending through the combustor liner 40. In a non-limiting example, each liner fuel orifice of the one or more liner fuel orifices 182 can have a complementary liner air orifice of the one or more liner orifices 184, such that there are the same number of one or more liner fuel orifices 182 and one or more liner air orifices 184. In some examples, the one or more liner fuel orifices 182 can be disposed in or adjacent to one or more liner air orifices 184. Where the one or more liner fuel orifices 182 are disposed in the one or more liner air orifices 184, each liner air orifice of the one or more liner air orifices 184 can be positioned in an annular arrangement about a respective liner fuel orifice of the one or more liner fuel orifices 182. The one or more liner air orifices 184 emit air 70 into the combustion chamber 50, such as around the second fuel F2 emitted from the one or more liner fuel orifices 182, which facilitates moving the second fuel F2 away from the combustor liner 40, which can limit temperatures at the combustor liner 40. One or more liner swirlers 186 can be fluidly coupled with or disposed in the one or more liner air orifices 184 to impart a swirl or tangential component to the air 70. In a non-limiting example, a first fuel flow rate, such as of the second fuel F2, to the one or more liner fuel orifices 182 at the outer liner 41 can be different than a second fuel flow rate, such as of the second fuel F2, to the one or more liner fuel orifices 182 at the inner liner 42.

In some examples, the combustor liner 40 can include an axial portion 190 and a converging portion 192 aft of the axial portion 190. The converging portion 192 is configured such that a radial dimension of the combustion chamber 50, relative to the combustion section centerline 33, decreases in the aft direction. The one or more liner fuel orifices 182 can be disposed at the axial portion 190, the converging portion 192, or both.

With some examples, the fuel nozzle assembly 48 can emit fuel, such as the first fuel F1 from the first fuel supply 34 and the second fuel F2 from the second fuel supply 36, according to engine operating conditions. For example, during higher power operation, the fuel nozzle assembly 48 can emit one or both of the first fuel F1 or the second fuel F2 through some or all of the fuel orifices 150 and emit the second fuel F2 through the one or more liner fuel orifices 182. During lower power operation, such as during cruising, the fuel nozzle assembly 48 may not emit the second fuel F2 through the one or more liner fuel orifices 182. In some instances, the fuel nozzle assembly 48 can provide fuel via the fuel orifices 150, such as one or more the first inner wall fuel orifices 154 (e.g., to provide a pilot), prior to emitting the second fuel F2 from the one or more liner fuel orifices 182, which can limit cold zones in the combustion chamber 50.

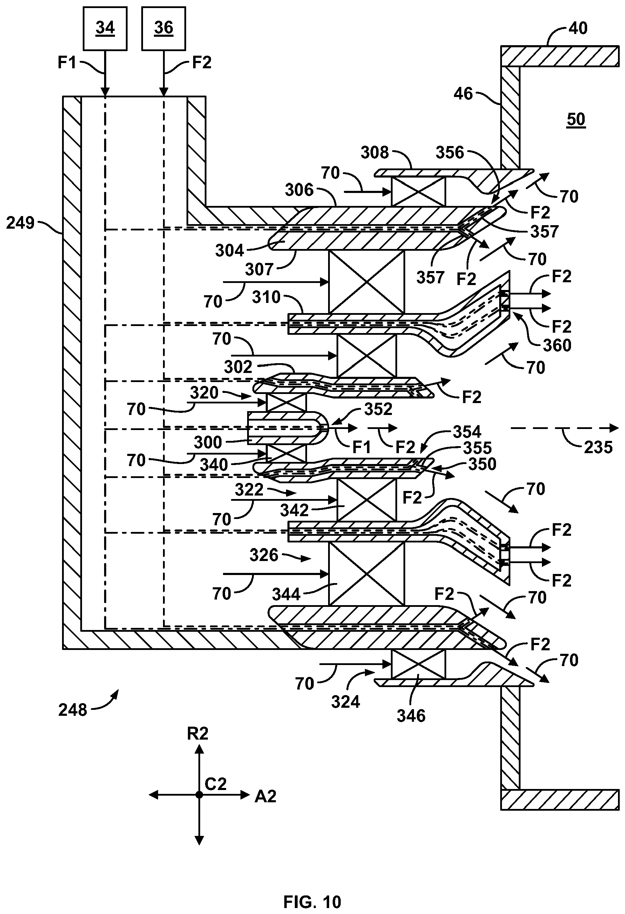

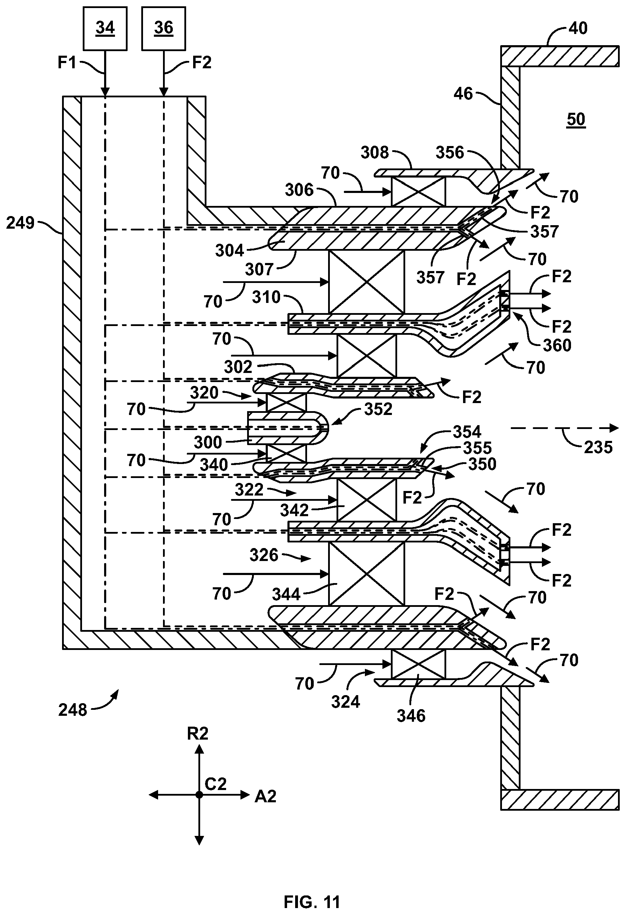

Referring to FIGS. 10 and 11, a fuel nozzle assembly 248 that can be utilized in the combustor 30 (FIG. 1) and coupled to the combustor liner 40, the wall 46, or both, is illustrated. The fuel nozzle assembly 248 can include aspects similar to those of the fuel nozzle assembly 48; therefore, like parts will be described with like numerals increased by 200, with it being understood that the description of the like parts of the fuel nozzle assembly 48 can apply to the fuel nozzle assembly 248, except where noted. For example, the fuel nozzle assembly 248 can include a fuel nozzle body 249 including a center body 300, a first inner wall 302, a body wall 304 having an outer surface 306, an outer wall 308 coupled to the outer surface 306, and a second inner wall 310. The center body 300 can be centered on a fuel nozzle assembly centerline 235 of the fuel nozzle assembly 248. The first inner wall 302 can be radially spaced outward from center body 300 to at least partially define a first inner fluid passage 320 that can provide air 70 to the combustion chamber 50. The second inner wall 310 can be spaced radially outward of the first inner wall 302 to at least partially define a second inner fluid passage 322 that can provide air 70 to the combustion chamber 50. The body wall 304 can be spaced radially outward of the second inner wall 310 to at least partially define a third inner fluid passage 326 that can provide air 70 to the combustion chamber 50. The second inner wall 310 The outer wall 308 can be spaced radially outward of the body wall 304 to at least partially define a first outer fluid passage 324 that can provide air 70 to the combustion chamber 50. An outer surface of the second inner wall 310 can diverge from the fuel nozzle assembly centerline 235, and an inner surface of the second inner wall 310 can converge toward and then diverge from the fuel nozzle assembly centerline 235.

The fuel nozzle assembly 248 can be fluidly coupled with the first fuel supply 34 and the second fuel supply 36 to provide the first fuel F1 and the second fuel F2 to the combustion chamber 50. A first swirler 340 can be disposed in the first inner fluid passage 320 to swirl air 70 prior to entering the combustion chamber 50. A second swirler 342 can be disposed in the second inner fluid passage 322 to swirl air 70 prior to entering the combustion chamber 50. A third swirler 344 can be disposed in the third inner fluid passage 326 to swirl air 70 prior to entering the combustion chamber 50. A fourth swirler 346 can be disposed in the first outer fluid passage 324 to swirl air 70 prior to entering the combustion chamber 50. The fuel nozzle assembly 248 can be configured to provide air 70 to the combustion chamber 50 through the first inner fluid passage 320, the second inner fluid passage 322, the first outer fluid passage 324, the third inner fluid passage 326, or combinations thereof, which can include air 70 moving through and being swirled by the first swirler 340, the second swirler 342, the third swirler 344, the fourth swirler 346, or combinations thereof. The first swirler 340, the second swirler 342, the third swirler 344, the fourth swirler 346, or combinations thereof can be configured as axial swirlers that impart a swirl (e.g., a tangential velocity component) to air 70 flowing in the second axial direction A2.

The fuel nozzle assembly 248 can include a plurality of fuel orifices 350 fluidly coupled with the one or both of the first fuel supply 34 or the second fuel supply 36. The plurality of fuel orifices 350 can include one or more center body fuel orifices 352 of the center body 300, one or more first inner wall fuel orifices 354 of the first inner wall 302, one or more body wall fuel orifices 356 of the body wall 304, one or more second inner wall fuel orifices 360 of the second inner wall 310, or combinations thereof. The one or more center body fuel orifices 352 can be forward of (e.g., closer to a forward end of the gas turbine engine 10 of FIG. 1 than) some or all the other fuel orifices 350. The one or more second inner wall fuel orifices 360 can be provided by the second inner wall 360 aft of (e.g., closer to an aft end of the gas turbine engine 10 of FIG. 1 than) some or all of the other fuel orifices 350. The one or more first inner wall fuel orifices 354 and the one or more body wall fuel orifices 356 can be axially offset, and can be axially between axial positions of the one or more center body fuel orifices 352 and the one or more second inner wall fuel orifices 360. Axially offset fuel orifices, such as the fuel orifices 350, can allow for different mixing times of air 70 with fuel, such as the first fuel F1 and the second fuel F2, which can provide decreased emissions and increased flame stability. For example, fuel orifices disposed farther forward allow for increased mixing times, which can reduce NOₓ emissions, and fuel orifices disposed farther aft can reduce mixing times, which can increase flame stability.

In a first mode of operation of the fuel nozzle assembly 248, such as generally illustrated in FIG. 10, the fuel nozzle assembly 248 can emit the first fuel F1, the second fuel F2, or both, through the one or more center body fuel orifices 352, emit the second fuel F2 through the one or more first inner wall fuel orifices 354, emit the second fuel F2 through the one or more body wall fuel orifices 356, emit the second fuel F2 through the one or more second inner wall fuel orifices 360, or combinations thereof. Emitting the second fuel F2 through the one or more first inner wall fuel orifices 354 can include emitting the second fuel F2 aft and radially outward. For example, at least a portion of a fuel passage 355 of the first inner wall 302 can be angled radially outward away from the fuel nozzle assembly centerline 235 to permit angled emission of the first fuel F1, the second fuel F2, or both. Emitting the second fuel F2 through the one or more body wall fuel orifices 356 can include emitting at least some of the second fuel F2 aft and radially outward, emitting at least some of the second fuel F2 aft and radially inward, or both. For example, at least one of the one or more body wall fuel orifices 356 (e.g., a first fuel orifice) can be disposed at the outer surface 306 of the body wall 304 and at least a portion of a body wall fuel passage 357 of the body wall 304 can be angled radially outward, directly radially outward or at an angle between directly radially outward and directly axially aft, away from the fuel nozzle assembly centerline 235 to permit angled emission of the first fuel F1, the second fuel F2, or both. Additionally or alternatively, at least one of the one or more body wall fuel orifices 356 (e.g., a second fuel orifice) can be formed at an inner surface 307 of the body wall 304 and can be angled between directly radially outward and directly axially aft. Emitting the second fuel F2 through the one or more second inner wall fuel orifices 360 can include emitting the second fuel F2 directly aft. For example, at least a portion of the body wall fuel passage 357 can be angled radially inward, directly radially inward or at an angle between directly radially inward and directly axially aft, toward the fuel nozzle assembly centerline 235 to permit angled emission of the first fuel F1, the second fuel F2, or both.

In a second mode of operation of the fuel nozzle assembly 248, such as generally illustrated in FIG. 11, the fuel nozzle assembly 248 can emit the second fuel F2 through the one or more first inner wall fuel orifices 354, emit the second fuel F2 through the one or more body wall fuel orifices 356, emit the second fuel F2 through the one or more second inner wall fuel orifices 360, or combinations thereof. Emitting the second fuel F2 through the one or more first inner wall fuel orifices 354 can include emitting the second fuel F2 aft and radially outward (e.g., between directly radially outward and directly axially aft). Additionally or alternatively, emitting the second fuel F2 through the one or more first inner wall fuel orifices 354 can include emitting the second fuel F2 aft and radially inward (e.g., between directly radially inward and directly axially aft). Emitting the second fuel F2 through the one or more body wall fuel orifices 356 can include emitting at least some of the second fuel F2 aft and radially outward, emitting at least some of the second fuel F2 aft and radially inward, or both. For example, at least one of the one or more body wall fuel orifices 356 can be disposed at the outer surface 306 of the body wall 304 and angled either directly radially outward or at an angle between directly radially outward and directly axially aft. Additionally or alternatively, at least one of the one or more body wall fuel orifices 356 can be formed at an inner surface 307 of the body wall 304 and can be angled between directly radially outward and directly axially aft. Emitting the second fuel F2 through the one or more second inner wall fuel orifices 360 can include emitting the second fuel F2 directly aft. In the second mode of operation, the fuel nozzle assembly 248 may not emit fuel through the center body 300.

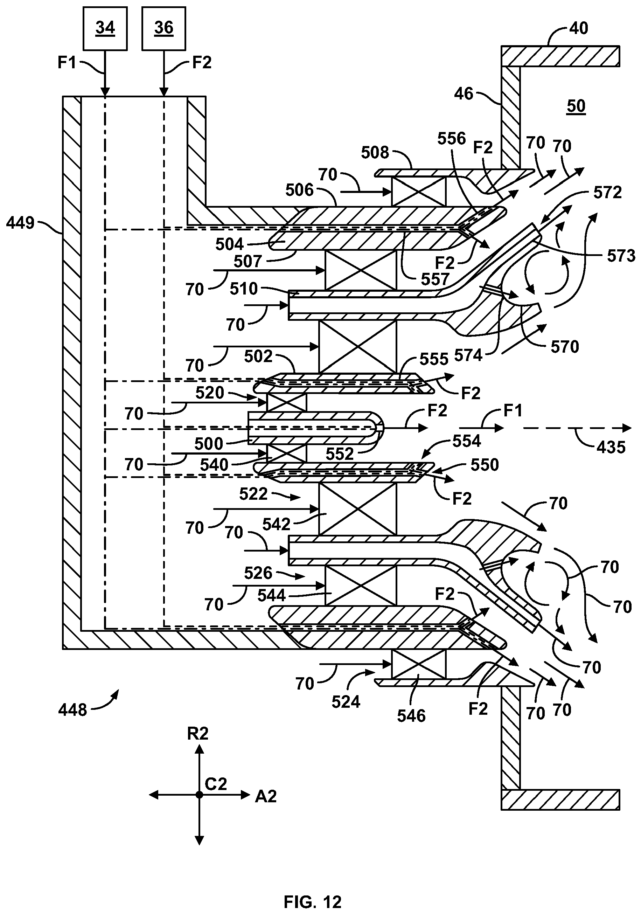

Referring to FIGS. 12-14, a fuel nozzle assembly 448 that can be utilized in the combustor 30 (FIG. 1) and coupled to the combustor liner 40, the wall 46, or both, is illustrated. The fuel nozzle assembly 448 can include aspects similar to those of the fuel nozzle assemblies 48 (FIGS. 3-9), 248 (FIGS. 10 and 11); therefore, like parts will be described with like numerals further increased by 200 with respect to FIGS. 10-11, with it being understood that the description of the like parts of the fuel nozzle assemblies 48, 248 can apply to the fuel nozzle assembly 448, except where noted. For example, the fuel nozzle assembly 448 can include a fuel nozzle body 449 including a center body 500, a first inner wall 502, a body wall 504 having an outer surface 506, an outer wall 508 coupled to the outer surface 506, and a second inner wall 510. The center body 500 can be centered on a centerline 435 of the fuel nozzle assembly 448. The first inner wall 502 can be radially spaced from center body 500 to at least partially define a first inner fluid passage 520. The second inner wall 510 can be spaced radially outward of the first inner wall 502 to at least partially define a second inner fluid passage 522. The body wall 504 can be spaced radially outward of the second inner wall 510 to at least partially define a third inner fluid passage 526. The outer wall 508 can be spaced radially outward of the body wall 504 to at least partially define a first outer fluid passage 524. The fuel nozzle assembly 448 can be fluidly coupled with the first fuel supply 34 and the second fuel supply 36 to provide the first fuel F1 and the second fuel F2 to the combustion chamber 50. A first swirler 540 can be disposed in the first inner fluid passage 520. A second swirler 542 can be disposed in the second inner fluid passage 522. A third swirler 544 can be disposed in the third inner fluid passage 526. A fourth swirler 546 can be disposed in the first outer fluid passage 524. The fuel nozzle assembly 448 can be configured to provide air 70 to the combustion chamber 50 through the first inner fluid passage 520, the second inner fluid passage 522, the first outer fluid passage 524, the third inner fluid passage 526, or combinations thereof, which can include air 70 moving through and being swirled by the first swirler 540, the second swirler 542, the third swirler 544, the fourth swirler 546, or combinations thereof. The first swirler 540, the second swirler 542, the third swirler 544, the fourth swirler 546, or combinations thereof can be configured as axial swirlers that impart a swirl (e.g., a tangential velocity component) to air 70 flowing in the second axial direction A2.

The fuel nozzle assembly 448 can include a plurality of fuel orifices 550 fluidly coupled with the one or both of the first fuel supply 34 or the second fuel supply 36. The plurality of fuel orifices 550 can include one or more center body fuel orifices 552 of the center body 500, one or more first inner wall fuel orifices 554 of the first inner wall 502, one or more body wall fuel orifices 556 of the body wall 504, or combinations thereof. The one or more center body fuel orifices 552 can be forward of (e.g., closer to a forward end of the gas turbine engine 10 of FIG. 1 than) some or all the other fuel orifices 550. The one or more first inner wall fuel orifices 554 can be axially between axial positions of the one or more center body fuel orifices 552 and the one or more body wall fuel orifices 556. Axially offset fuel orifices, such as the fuel orifices 550, can allow for different mixing times of air 70 with fuel, such as the first fuel F1 and the second fuel F2, which can provide decreased emissions and increased flame stability. For example, fuel orifices disposed farther forward allow for increased mixing times, which can reduce NOₓ emissions, and fuel orifices disposed farther aft can reduce mixing times, which can increase flame stability.

In some examples, the second inner wall 510 can include a recess 570 that opens aft. The recess 570 can be disposed at the trailing edge of the second inner wall 510 and can be curved to facilitate circulation of air 70 in the recess 570, such as to cool the trailing edge of the second inner wall 510. The second inner wall 510 can include a first air orifice 572 and a second air orifice 574, such as instead of a second inner wall fuel orifice (e.g., the one or more second inner wall fuel orifices 360 of FIG. 10). The first air orifice 572 can emit air into the combustion chamber 50. The second air orifice 574 can emit air into the recess 570, which can be disposed partially or entirely in the combustion chamber 50.

In a first mode of operation of the fuel nozzle assembly 448, such as generally illustrated in FIG. 12, the fuel nozzle assembly 448 can emit the first fuel F1, the second fuel F2, or both, through the one or more center body fuel orifices 552, emit the second fuel F2 through the one or more first inner wall fuel orifices 554, emit the second fuel F2 through the one or more body wall fuel orifices 556, emit air 70 through the first air orifice 572 and the second air orifice 574, or combinations thereof. Emitting the second fuel F2 through the one or more first inner wall fuel orifices 554 can include emitting the second fuel F2 aft and radially outward. For example, at least a portion of a fuel passage 555 of the first inner wall 502 can be angled radially outward away the fuel nozzle assembly centerline 435 to permit angled emission of the first fuel F1, the second fuel F2, or both. Emitting the second fuel F2 through the one or more body wall fuel orifices 556 can include emitting at least some of the second fuel F2 aft and radially outward, emitting at least some of the second fuel F2 aft and radially inward, or both. For example, at least a portion of a fuel passage 557 of the body wall 504 can be angled radially outward away the fuel nozzle assembly centerline 435, at least a portion of the fuel passage 557 can be angled radially inward toward the fuel nozzle assembly centerline 435, or a combination thereof, to permit angled emission of the first fuel F1, the second fuel F2, or both.

Emitting air 70 through the first air orifice 572 can include emitting air 70 radially outward and aft. For example, at least a portion of an air passage 573 of the second inner wall 510 can be angled radially outward away the fuel nozzle assembly centerline 435 to permit angled emission of air 70. Emitting air 70 through the second air orifice 574 can include emitting air 70 into the recess 570. The recess 570, the first air orifice 572, the second air orifice 574, or combinations thereof can be aft of (e.g., closer to an aft end of the gas turbine engine 10 of FIG. 1 than) some or all of the fuel orifices 550.

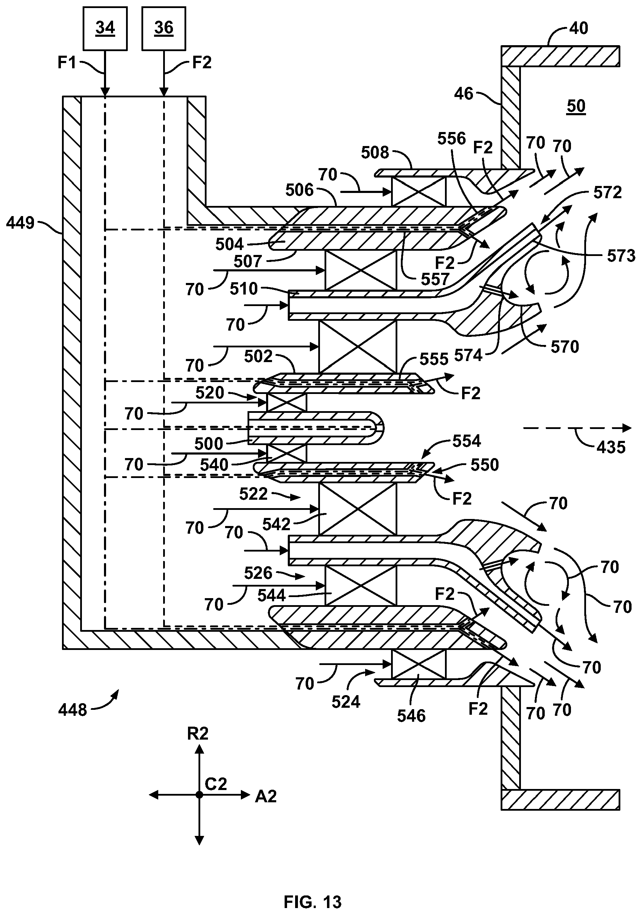

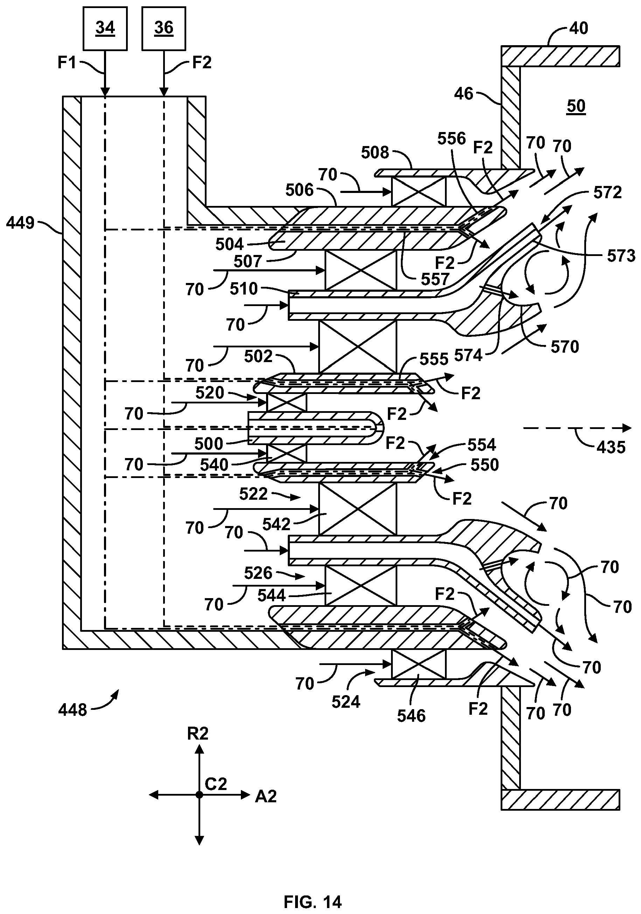

In a second mode of operation of the fuel nozzle assembly 448, such as generally illustrated in FIGS. 13 and 14, the fuel nozzle assembly 448 can emit the second fuel F2 from the one or more first inner wall fuel orifices 554, emit the second fuel F2 through the one or more body wall fuel orifices 556, emit air 70 through the first air orifice 572 and the second air orifice 574, or combinations thereof. Emitting the second fuel F2 through the one or more first inner wall fuel orifices 554 can include emitting the second fuel F2 radially outward and aft (FIG. 13) or can include emitting the second fuel F2 radially inward and aft and emitting the second fuel F2 radially outward and aft (FIG. 14).

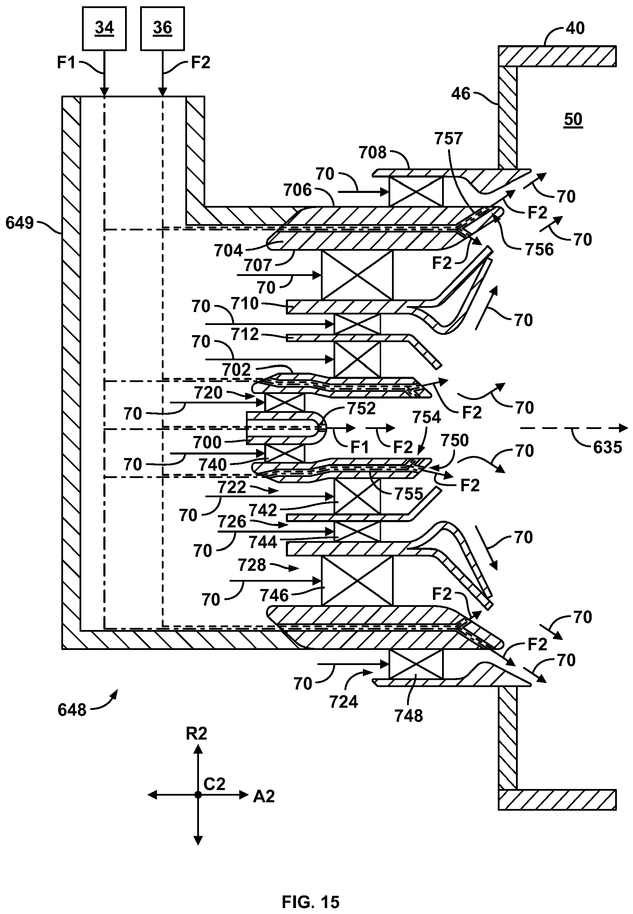

Referring to FIGS. 15-17, a fuel nozzle assembly 648 that can be utilized in the combustor 30 (FIG. 1) and coupled to the combustor liner 40, the wall 46, or both, is illustrated. The fuel nozzle assembly 648 can include aspects similar to those of the fuel nozzle assemblies 48 (FIGS. 3-9), 248 (FIGS. 10-11), 448 (FIGS. 12-14); therefore, like parts will be described with like numerals further increased by 200 with respect to FIGS. 12-14, with it being understood that the description of the like parts of the fuel nozzle assemblies 48, 248, 448 can apply to the fuel nozzle assembly 648, except where noted. For example, the fuel nozzle assembly 648 can include a fuel nozzle body 649 including a center body 700, a first inner wall 702, a body wall 704 having an outer surface 706, an outer wall 708 coupled to the outer surface 706, a second inner wall 710, and a third inner wall 712. The center body 700 can be centered on a fuel nozzle assembly centerline 635 of the fuel nozzle assembly 648. The first inner wall 702 can be radially spaced outward from center body 700 to at least partially define a first inner fluid passage 720. The third inner wall 712 can be radially spaced outward of the first inner wall 702 to at least partially define a second inner fluid passage 722. The second inner wall 710 can be spaced radially outward of the third inner wall 712 to at least partially define a third inner fluid passage 726. The body wall 704 can be spaced radially outward of the second inner wall 710 to at least partially define a fourth inner fluid passage 728. The outer wall 708 can be spaced radially outward of the body wall 704 to at least partially define a first outer fluid passage 724. The fuel nozzle assembly 648 can be fluidly coupled with the first fuel supply 34 and the second fuel supply 36 to provide the first fuel F1 and the second fuel F2 to the combustion chamber 50. An outer surface of the second inner wall 710 can diverge from the fuel nozzle assembly centerline 635, and an inner surface of the second inner wall 710 can converge toward and then diverge from the fuel nozzle assembly centerline 635. A diverging inner surface of the second inner wall 710 can facilitate flow of air radially outward to mix with fuel, such as the second fuel F2, emitted from the body wall fuel orifices 756.

A first swirler 740 can be disposed in the first inner fluid passage 720. A second swirler 742 can be disposed in the second inner fluid passage 722. A third swirler 744 can be disposed in the third inner fluid passage 726. A fourth swirler 746 can be disposed in the fourth inner fluid passage 728. A fifth swirler 748 can be disposed in the first outer fluid passage 724. The fuel nozzle assembly 648 can be configured to provide air 70 to the combustion chamber 50 through the first inner fluid passage 720, the second inner fluid passage 722, the first outer fluid passage 724, the third inner fluid passage 726, the fourth inner fluid passage 728, or combinations thereof, which can include air 70 moving through the first swirler 740, the second swirler 742, the third swirler 744, the fourth swirler 746, the fifth swirler 748, or combinations thereof. The first swirler 740, the second swirler 742, the third swirler 744, the fourth swirler 746, the fifth swirler 748, or combinations thereof can be configured as axial swirlers that impart a swirl (e.g., a tangential velocity component) to air 70 flowing in the second axial direction A2.

The fuel nozzle assembly 648 can include a plurality of fuel orifices 750 fluidly coupled with one or both of the first fuel supply 34 or the second fuel supply 36. The plurality of fuel orifices 750 can include one or more center body fuel orifices 752 of the center body 700, one or more first inner wall fuel orifices 754 of the first inner wall 702, one or more body wall fuel orifices 756 of the body wall 704, or combinations thereof. The one or more center body fuel orifices 752 can be forward of (e.g., closer to a forward end of the gas turbine engine 10 of FIG. 1 than) some or all the other fuel orifices 750. The one or more first inner wall fuel orifices 754 can be axially between axial positions of the one or more center body fuel orifices 752 and the one or more body wall fuel orifices 756. Axially offset fuel orifices, such as the fuel orifices 750, can allow for different mixing times of air 70 with fuel, such as the first fuel F1 and the second fuel F2, which can provide decreased emissions and increased flame stability. For example, fuel orifices disposed farther forward allow for increased mixing times, which can reduce NOₓ emissions, and fuel orifices disposed farther aft can reduce mixing times, which can increase flame stability.

In a first mode of operation of the fuel nozzle assembly 648, such as generally illustrated in FIG. 15, the fuel nozzle assembly 648 can emit the first fuel F1, the second fuel F2, or both, through the one or more center body fuel orifices 752, emit the second fuel F2 through the one or more first inner wall fuel orifices 754, emit the second fuel F2 through the one or more body wall fuel orifices 756, or combinations thereof. Emitting the second fuel F2 through the one or more first inner wall fuel orifices 754 can include emitting the second fuel F2 aft and radially outward. For example, at least a portion of a fuel passage 755 of the first inner wall 702 can be angled radially outward away the fuel nozzle assembly centerline 635 to permit angled emission of the first fuel F1, the second fuel F2, or both. Emitting the second fuel F2 through the one or more body wall fuel orifices 756 can include emitting at least some of the second fuel F2 aft and radially outward, emitting at least some of the second fuel F2 aft and radially inward, or both. For example, at least a portion of a fuel passage 757 of the body wall 704 can be angled radially outward away the fuel nozzle assembly centerline 635, at least a portion of the fuel passage 757 of the body wall 704 can be angled radially inward toward the fuel nozzle assembly centerline 635, or a combination thereof, to permit angled emission of the first fuel F1, the second fuel F2, or both.

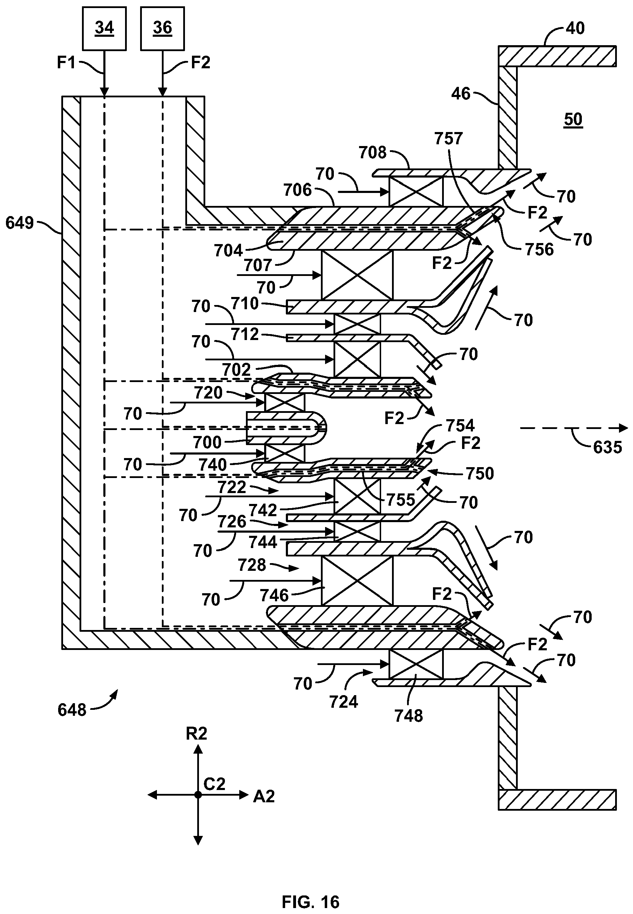

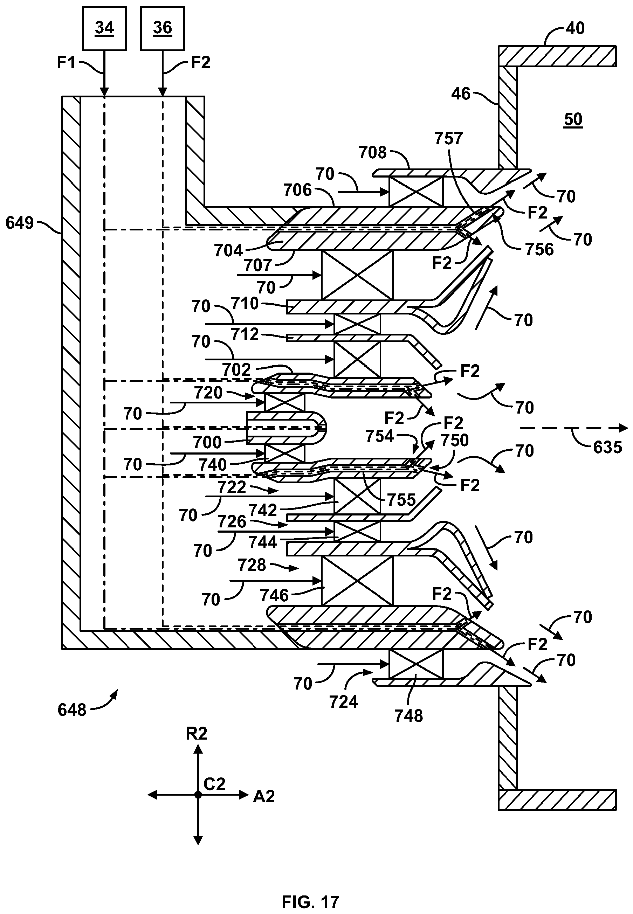

In a second mode of operation of the fuel nozzle assembly 648, such as generally illustrated in FIGS. 16 and 17, the fuel nozzle assembly 648 can emit the second fuel F2 from the one or more first inner wall fuel orifices 754, emit the second fuel F2 through the one or more body wall fuel orifices 756, or combinations thereof (e.g., without emitting fuel through the one or more center body fuel orifices 752). Emitting the second fuel F2 through the one or more first inner wall fuel orifices 754 can include emitting the second fuel F2 radially inward and aft (FIG. 16) or can include emitting the second fuel F2 radially inward and aft and emitting the second fuel F2 radially outward and aft (FIG. 17).

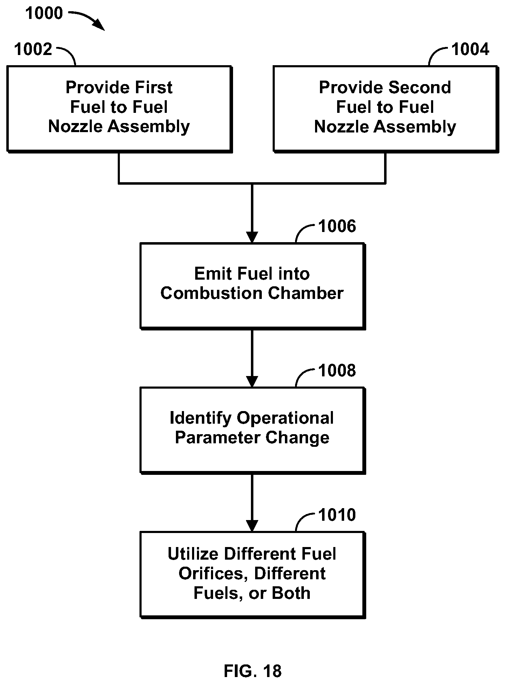

Referring to FIG. 18, a method 1000 of operating a gas turbine engine is illustrated. The method 1000 can be utilized with the gas turbine engine 10 and components thereof, such as generally illustrated in FIGS. 1-17. The method 1000 can include providing the first fuel F1 to the fuel nozzle assembly 48, 248, 448, 648 (block 1002), such as from the first fuel supply 34. Additionally or alternatively, the method 1000 can include providing the second fuel F2 to the fuel nozzle assembly 48, 248, 448, 648 (block 1004), such as from the second fuel supply 36.

The method 1000 can include emitting fuel, such as the first fuel F1, the second fuel F2, or both, from the fuel nozzle assembly 48, 248, 448, 648 into the combustion chamber 50 (block 1006), such as via one or more fuel orifices 150, 350, 550, 750. Emitting the first fuel F1 (e.g., liquid fuel) into the combustion chamber 50 can include emitting the first fuel F1 in the second axial direction A2 of the fuel nozzle assembly 48, 248, 448, 648 from the center body fuel orifice 152, 352, 552, 752. Additionally or alternatively, emitting the second fuel F2 (e.g., hydrogen gas) into the combustion chamber 50 can include emitting the second fuel F2 radially outward from an outer surface of the fuel nozzle assembly 48, 248, 448, 648, such as from a first body wall fuel orifices of the one or more body wall fuel orifices 156, 356, 556, 756 disposed at the outer surface 106, 306, 506, 706 of the body wall 304, 504, 704. Emitting the second fuel F2 radially outward can include emitting the second fuel F2 directly radially outward or radially outward and aft. Emitting the second fuel F2 into the combustion chamber 50 can, additionally or alternatively, include emitting the second fuel F2 from a second body wall fuel orifice of the one or body wall fuel orifices 156, 356, 556, 756 disposed at the inner surface 307, 507, 707 of the body wall 304, 504, 704. Emitting the second fuel F2 into the combustion chamber 50 can, additionally or alternatively, include emitting the second fuel F2 radially outward from one or more of the first inner wall fuel orifices 154, 354, 554, 754 of the first inner wall 102, 302, 502, 702. Emitting the fuel into the combustion chamber 50 can, additionally or alternatively, include emitting the first fuel F1 and emitting the second fuel F2 from one or more center body fuel orifices 152, 352, 552, 752 into the combustion chamber 50.

In some examples, emitting fuel into the combustion chamber 50 (block 1006) can include operating the fuel nozzle assembly 48, 248, 448, 648 in a first mode, a second mode, a third mode, or combinations thereof.

Operating in the first mode (e.g., a dual fuel mode) can include the fuel nozzle assembly 48 emitting the first fuel F1 and the second fuel F2 into the combustion chamber 50 (e.g., simultaneously), which can include emitting at least one of the first fuel F1 or the second fuel F2 radially outward from an outer surface of the fuel nozzle assembly 48, 248, 448, 648 (e.g., from the outer surface 106, 306, 506, 706). For example, the fuel nozzle assembly 48, 248, 448, 648 can emit the first fuel F1 via one or more fuel orifices 150, 350, 550, 750 and can emit the second fuel F2 through the one or more liner fuel orifices 182.

Operating in the second mode (e.g., a gaseous fuel mode) can include the fuel nozzle assembly 48, 248, 448, 648 emitting the second fuel F2 (e.g., gaseous hydrogen fuel) into the combustion chamber 50, such as radially inward from the first inner wall 102, 302, 502, 702, axially from the outer wall 108, 308, 508, 708, or both. The second operating mode can include the fuel nozzle assemblies 48, 248, 448, 648 not emitting the first fuel F1 into the combustion chamber 50. Operating in the second mode can allow for reduced or zero carbon emissions.

Operating in the third mode (e.g., a liquid fuel mode) can include the fuel nozzle assembly 48, 248, 448, 648 emitting the first fuel F1 (e.g., liquid fuel) into the combustion chamber 50, such as from one or more body wall fuel orifices 156, 356, 556, 756 radially outward, which can be in a cross flow with air 70 from the mixer 130. Additionally or alternatively, operating in the third mode can include the fuel nozzle assembly 48, 248, 448, 648 emitting the first fuel F1 radially outward (e.g., directly radially outward or radially outward and aft) from the center body 100, 300, 500, 700, such as toward the first inner wall 102, 302, 502, 702. The third operating mode can include the fuel nozzle assemblies 48, 248, 448, 648 not emitting the second fuel F2 into the combustion chamber 50.

The method 1000 can include identifying a change in an operational parameter of the gas turbine engine 10 or a vehicle (e.g., an aircraft) coupled thereto (block 1008). The change can be identified via the controller 60, one or more sensors in communication with the controller 60, or a combination thereof. The operational parameter can include one or more of thrust demand, amount of the first fuel F1 available, amount of the second fuel F2 available, or other parameters. The method 1000 can, in response to identifying the change in the operational parameter, include utilizing a different combination of fuel orifices 150, 350, 550, 750, utilizing different amounts of the first fuel F1 and the second fuel F2, or combinations thereof (block 1010). For example, if the controller 60 determines that there is an insufficient amount of the first fuel F1 to emit via the one or more body wall fuel orifices 156, 356, 556, 756 (e.g., as a main fuel), the controller 60 may control one or more of the first fuel supply 34, the second fuel supply 36, or the fuel nozzle assembly 48, 248, 448, 648 to provide the first fuel F1 to only the one or more center body fuel orifices 152, 352, 552, 752, the one or more first inner wall fuel orifices 154, 354, 554, 754, or combinations thereof (e.g., as a pilot fuel), without providing the first fuel F1 to the one or more body wall fuel orifices 156, 356, 556, 756. Additionally or alternatively, the controller 60 may control one or more of the second fuel supply 36 or the fuel nozzle assembly 48, 248, 448, 648 to provide the second fuel F2 to the one or more body wall fuel orifices 156, 356, 556, 756 (e.g., as a main fuel).

The combustor 30 (FIG. 2) can include various combinations of adjacent fuel nozzle assemblies 48, 248, 448, 648. For example, the combustor 30 (FIG. 2) can include combinations of the fuel nozzle assemblies of FIGS. 3-17 and can include fuel nozzle assemblies with combinations of aspects of the fuel nozzle assemblies shown in FIGS. 3-17. The disclosed fuel nozzle assemblies are not mutually exclusive.

Fluid passages of the fuel nozzle assemblies 48, 248, 448, 648, such as the first inner fluid passages 120, 320, 520, 720, the second inner fluid passages 122, 322, 522, 722, the first outer fluid passage 124, 324, 524, 724, the third inner fluid passage 326, 526, 726, and the fourth inner fluid passage 728, can be configured as separate tubes (e.g., annular tubes), passages formed in the fuel nozzle body 49, 249, 449, 649 of the fuel nozzle assembly 48, 248, 448, 648 (e.g., annular passages), or combinations thereof.

With some examples, the fuel nozzle assemblies 48, 248, 448, 648, can be operated without utilizing inert gas, such as steam.

While described with respect to a turbine engine, it should be appreciated that the combustor as described herein can be for any engine having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all of the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

A gas turbine engine, comprising: a compressor section, a combustion section, and a turbine section in a serial flow arrangement, with the combustion section comprising: a combustor liner that at least partially defines a combustion chamber; and a fuel nozzle assembly, comprising: a liquid fuel supply to supply a liquid fuel; a hydrogen fuel supply to supply a gaseous hydrogen fuel; and a fuel nozzle body defining a fuel nozzle assembly centerline, the fuel nozzle body fluidly coupled with the liquid fuel supply and the hydrogen fuel supply to provide the liquid fuel and the gaseous hydrogen fuel to the combustion chamber; wherein the fuel nozzle body includes a body wall including an outer surface with a first fuel orifice to emit the gaseous hydrogen fuel radially outward and including an inner surface with a second fuel orifice to emit at least one of the gaseous hydrogen fuel or the liquid fuel radially inward.

The gas turbine engine of any preceding clause, wherein the fuel nozzle assembly includes an outer wall radially outward of the body wall, and the first fuel orifice is angled radially outward and aft to emit the gaseous hydrogen fuel toward the outer wall, into the combustion chamber, or both.

The gas turbine engine of any preceding clause, wherein the second fuel orifice is angled radially inward and aft to emit the at least one of the gaseous hydrogen fuel or the liquid fuel into the combustion chamber.

The gas turbine engine of any preceding clause, wherein the first fuel orifice is disposed at a trailing edge of the body wall.

The gas turbine engine of any preceding clause, wherein the fuel nozzle assembly includes an outer wall coupled to and spaced radially outward from the outer surface of the body wall such that an outer fluid passage is at least partially defined between the outer surface of the body wall and the outer wall.

The gas turbine engine of any preceding clause, wherein the first fuel orifice is disposed to emit the at least one of the liquid fuel or the gaseous hydrogen fuel into air in or emitted from the outer fluid passage.

The gas turbine engine of any preceding clause, wherein the fuel nozzle body includes: a center body, a first inner wall radially outward of the center body, and a second inner wall radially outward of the first inner wall.

The gas turbine engine of any preceding clause, wherein the first inner wall is radially outward of the center body such that a first inner fluid passage is at least partially defined between the center body and the first inner wall; and wherein the second inner wall is radially outward of the first inner wall such that such that a second inner fluid passage is at least partially defined between the first inner wall and the second inner wall, and such that a third inner fluid passage is at least partially defined between the second inner wall and the body wall.

The gas turbine engine of any preceding clause, wherein the fuel nozzle assembly includes a first swirler disposed in the first inner fluid passage, a second swirler disposed in the second inner fluid passage, and a third swirler disposed in the third inner fluid passage.

The gas turbine engine of any preceding clause, wherein the center body includes a center body fuel orifice fluidly coupled with the liquid fuel supply and the hydrogen fuel supply.

The gas turbine engine of any preceding clause, wherein the first inner wall includes a first inner wall fuel orifice fluidly coupled with the hydrogen fuel supply.

The gas turbine engine of any preceding clause, wherein the second inner wall includes a second inner wall fuel orifice fluidly coupled the hydrogen fuel supply.

The gas turbine engine of any preceding clause, wherein the first fuel orifice is aft of the center body fuel orifice.

The gas turbine engine of any preceding clause, wherein the first inner wall fuel orifice is aft of the center body fuel orifice and forward of the first fuel orifice.

The gas turbine engine of any preceding clause, wherein a first inner wall fuel orifice of the first inner wall is angled radially outward and aft relative to the fuel nozzle assembly centerline.

The gas turbine engine of any preceding clause, wherein the fuel nozzle body includes a third inner wall spaced radially outward of the first inner wall and radially inward of the second inner wall, and the fuel nozzle assembly includes an outer wall radially outward of the body wall; wherein the center body and the first inner wall at least partially define a first inner fluid passage, the first inner wall and the third inner wall at least partially define a second inner fluid passage, the third inner wall and the second inner wall at least partially define a third inner fluid passage, the second inner wall and the body wall at least partially define a fourth inner fluid passage, and the body wall and the outer wall at least partially define a first outer fluid passage; and wherein a first swirler is disposed in the first inner fluid passage, a second swirler is disposed in the second inner fluid passage, a third swirler is disposed in the third inner fluid passage, a fourth swirler is disposed in the fourth inner fluid passage, and a fifth swirler is disposed in the first outer fluid passage.

The gas turbine engine of any preceding clause, wherein the outer wall extends axially aft such that a trailing edge of the outer wall and a trailing edge of the mixer wall of the mixer are axially aligned relative to the fuel nozzle assembly centerline.

The gas turbine engine of any preceding clause, wherein the fuel nozzle assembly includes a first fluid conduit fluidly coupled with or included with the first fuel supply, and a second fluid conduit fluidly couple with or included with the second fuel supply.

The gas turbine engine of any preceding clause, wherein the first fuel conduit and the second fuel conduit are separate.

The gas turbine engine of any preceding clause, wherein at least some portions of the first fuel conduit and the second fuel conduit are disposed concentrically.

The gas turbine engine of any preceding clause, wherein at least a portion of the first fuel conduit extends through the second fuel conduit to allow the second fuel to flow through the second fuel conduit around the first fuel flowing through the first fuel conduit.

A method of operating a gas turbine engine including a compressor section, a combustion section, and a turbine section in a serial flow arrangement, with the combustion section including a combustor liner that at least partially defines a combustion chamber, and a gaseous fuel nozzle assembly fluidly coupled with the combustion chamber, the method comprising: emitting a gaseous hydrogen fuel radially outward from a first fuel orifice of an outer surface of the gaseous fuel nozzle assembly; and emitting a liquid fuel in an axial direction of the gaseous fuel nozzle assembly from a center body fuel orifice of the gaseous fuel nozzle assembly.

The method of any preceding clause, further comprising emitting the gaseous hydrogen fuel from a second fuel orifice, the second fuel orifice formed at an inner surface of a body wall of the gaseous fuel nozzle assembly, the body wall including the outer surface.

The method of any preceding clause, further comprising emitting the gaseous hydrogen fuel radially outward from a first inner wall fuel orifice of a first inner wall of the gaseous fuel nozzle assembly.

The method of any preceding clause, further comprising emitting the gaseous hydrogen fuel from the center body fuel orifice after emitting the liquid fuel from the center body fuel orifice

A fuel nozzle assembly for a gas turbine engine, the fuel nozzle assembly comprising: a liquid fuel supply to supply a liquid fuel; a hydrogen fuel supply to supply a gaseous hydrogen fuel; and a fuel nozzle body defining a fuel nozzle assembly centerline, the fuel nozzle body fluidly coupled with the liquid fuel supply and the hydrogen fuel supply to provide the liquid fuel and the gaseous hydrogen fuel to a combustion chamber; wherein the fuel nozzle body includes a body wall including an outer surface with a first fuel orifice to emit the gaseous hydrogen fuel radially outward and including an inner surface with a second fuel orifice to emit at least one of the gaseous hydrogen fuel or the liquid fuel radially inward.

The fuel nozzle assembly of any preceding clause, further comprising an outer wall radially outward of the body wall, and the first fuel orifice is angled radially outward and aft to emit the gaseous hydrogen fuel toward the outer wall, into the combustion chamber, or both.

The fuel nozzle assembly of any preceding clause, wherein the second fuel orifice is angled radially inward and aft to emit the at least one of the gaseous hydrogen fuel or the liquid fuel into the combustion chamber.

The fuel nozzle assembly of any preceding clause, wherein the first fuel orifice is disposed at a trailing edge of the body wall.

The fuel nozzle assembly of any preceding clause, wherein the fuel nozzle assembly includes an outer wall coupled to and spaced radially outward from the outer surface of the body wall such that an outer fluid passage is at least partially defined between the outer surface of the body wall and the outer wall.

The fuel nozzle assembly of any preceding clause, wherein the first fuel orifice is disposed to emit the at least one of the liquid fuel or the gaseous hydrogen fuel into air in or emitted from the outer fluid passage.

The fuel nozzle assembly of any preceding clause, wherein the fuel nozzle body includes: a center body, a first inner wall radially outward of the center body, and a second inner wall radially outward of the first inner wall.

The fuel nozzle assembly of any preceding clause, wherein the first inner wall is radially outward of the center body such that a first inner fluid passage is at least partially defined between the center body and the first inner wall; and wherein the second inner wall is radially outward of the first inner wall such that such that a second inner fluid passage is at least partially defined between the first inner wall and the second inner wall, and such that a third inner fluid passage is at least partially defined between the second inner wall and the body wall.

The fuel nozzle assembly of any preceding clause, further comprising includes a first swirler disposed in the first inner fluid passage, a second swirler disposed in the second inner fluid passage, and a third swirler disposed in the third inner fluid passage.

The fuel nozzle assembly of any preceding clause, wherein the center body includes a center body fuel orifice fluidly coupled with the liquid fuel supply and the hydrogen fuel supply.

The fuel nozzle assembly of any preceding clause, wherein the first inner wall includes a first inner wall fuel orifice fluidly coupled with the hydrogen fuel supply.

The fuel nozzle assembly of any preceding clause, wherein the second inner wall includes a second inner wall fuel orifice fluidly coupled the hydrogen fuel supply.

The fuel nozzle assembly of any preceding clause, wherein the first fuel orifice is aft of the center body fuel orifice.

The fuel nozzle assembly of any preceding clause, wherein an outer surface of the second inner wall diverges from the fuel nozzle assembly centerline.

The fuel nozzle assembly of any preceding clause, wherein the second inner wall includes a recess that opens aft.

The fuel nozzle assembly of any preceding clause, wherein the recess is curved to facilitate circulation of air in the recess.

The fuel nozzle assembly of any preceding clause, wherein an inner surface of the second inner wall converges toward and then diverges from the fuel nozzle assembly centerline.

The fuel nozzle assembly of any preceding clause, wherein an inner surface of the second inner wall diverges from the fuel nozzle assemble centerline to facilitate flow of air radially outward for mixing with fuel emitted from the body wall fuel orifices.

The fuel nozzle assembly of any preceding clause, wherein the first inner wall fuel orifice is aft of the center body fuel orifice and forward of the first fuel orifice.

The fuel nozzle assembly of any preceding clause, wherein a first inner wall fuel orifice of the first inner wall is angled radially outward and aft relative to the fuel nozzle assembly centerline.

A gas turbine engine, comprising: a compressor section, a combustion section, and a turbine section in a serial flow arrangement, with the combustion section comprising: a combustor liner that at least partially defines a combustion chamber; and a fuel nozzle assembly, comprising: a liquid fuel supply to supply a liquid fuel; a hydrogen fuel supply to supply a gaseous hydrogen fuel; and a fuel nozzle body fluidly coupled with the liquid fuel supply and the hydrogen fuel supply to provide the liquid fuel and the gaseous hydrogen fuel to the combustion chamber; wherein the fuel nozzle body includes an outer surface with a fuel orifice fluidly coupled with the liquid fuel supply and the hydrogen fuel supply to emit at least one of the liquid fuel or the gaseous hydrogen fuel radially outward relative to the fuel nozzle assembly centerline.

The gas turbine engine of any preceding clause, wherein the fuel orifice is arranged parallel to a radial direction relative to the fuel nozzle assembly centerline.

The gas turbine engine of any preceding clause, wherein the fuel nozzle body includes: a center body, a first inner wall radially outward of the center body such that a first inner fluid passage is at least partially defined between the center body and the first inner wall, and a body wall radially outward of the first inner wall such that a second inner fluid passage is at least partially defined between the first inner wall and the body wall, the body wall including the outer surface.

The gas turbine engine of any preceding clause, wherein the fuel nozzle assembly includes an outer wall coupled to and spaced radially outward from outer surface of the body wall to define an outer fluid passage.

The gas turbine engine of any preceding clause, wherein the outer wall includes a plurality of outer wall fuel orifices arranged in an annular configuration, with outer wall fuel orifices of the plurality of outer wall fuel orifices disposed at circumferential sides of the outer wall, defined relative to a centerline of the combustor, having relatively larger diameters, and outer wall fuel orifices of the plurality of outer wall fuel orifices disposed at a radially inner portion and a radially outer portion of the outer wall, relative to the centerline of the combustion section, having relatively smaller diameters.

The gas turbine engine of any preceding clause, wherein the plurality of outer wall fuel orifices is arranged in an alternating pattern with at least some of the plurality of outer wall fuel orifices fluidly coupled with the liquid fuel supply and adjacent outer wall fuel orifices of the plurality of outer wall fuel orifices fluidly coupled with the hydrogen fuel supply.

The gas turbine engine of any preceding clause, wherein the fuel orifice is disposed at or downstream of an outlet of the outer fluid passage.

The gas turbine engine of any preceding clause, wherein the fuel nozzle assembly includes a mixer coupled to the outer wall.

The gas turbine engine of any preceding clause, wherein the mixer includes a radial swirler.

The gas turbine engine of any preceding clause, wherein the fuel nozzle assembly includes a first axial swirler in the first inner fluid passage and a second axial swirler in the second inner fluid passage.

The gas turbine engine of any preceding clause, wherein the fuel nozzle assembly includes a third axial swirler in the outer fluid passage.

The gas turbine engine of any preceding clause, wherein the mixer includes a mixer wall that extends in an axial direction of the fuel nozzle assembly; and wherein the fuel orifice is directed at the mixer wall.

The gas turbine engine of any preceding clause, wherein the fuel nozzle assembly includes a liner fuel conduit fluidly coupled with a liner fuel orifice of the combustor liner.

The gas turbine engine of any preceding clause, wherein the combustor liner further includes a liner air orifice, and the liner fuel orifice is adjacent to or disposed in the liner air orifice.

The gas turbine engine of any preceding clause, further comprising a liner swirler fluidly coupled with or disposed in the liner air orifice.

The gas turbine engine of any preceding clause, wherein the combustor liner includes an axial portion and a converging portion aft of the axial portion.

The gas turbine engine of any preceding clause, wherein the axial portion includes the liner fuel orifice.

A method of operating a gas turbine engine including a compressor section, a combustion section, and a turbine section in a serial flow arrangement, with the combustion section including a combustor liner that at least partially defines a combustion chamber, and a fuel nozzle assembly fluidly coupled with the combustion chamber, the method comprising: operating the fuel nozzle assembly in a first mode to emit the gaseous hydrogen fuel and the liquid fuel into the combustion chamber; operating the fuel nozzle assembly in a second mode to emit a gaseous hydrogen fuel into the combustion chamber; operating the fuel nozzle assembly in a third mode to emit a liquid fuel into the combustion chamber; and wherein operating the fuel nozzle assembly in the third mode includes emitting at least one of the gaseous hydrogen fuel or the liquid fuel radially outward from an outer surface of the fuel nozzle assembly.

The method of any preceding clause, wherein operating the fuel nozzle assembly in the first mode includes emitting the liquid fuel from one or more fuel orifices of the fuel nozzle assembly and emitting the gaseous hydrogen fuel from a liner fuel orifice of the combustor liner.

The method of any preceding clause, wherein the fuel nozzle assembly includes a center body, a first inner wall, a body wall including the outer surface, an outer wall coupled to the outer surface, and a mixer coupled to the outer wall; and wherein operating the fuel nozzle assembly in the third mode includes emitting the liquid fuel from a body wall fuel orifice of the outer surface of body wall radially outward in a cross flow with air from the mixer.

The method of any preceding clause, wherein operating the fuel nozzle assembly in the first mode includes emitting the liquid fuel radially outward from the center body.

The method of any preceding clause, wherein operating the fuel nozzle assembly in the second mode includes emitting the gaseous hydrogen fuel radially inward from the first inner wall and axially from the outer wall.

A fuel nozzle assembly for a gas turbine engine, the fuel nozzle assembly comprising: a liquid fuel supply to supply a liquid fuel; a hydrogen fuel supply to supply a gaseous hydrogen fuel; and a fuel nozzle body fluidly coupled with the liquid fuel supply and the hydrogen fuel supply to provide the liquid fuel and the gaseous hydrogen fuel to a combustion chamber; wherein the fuel nozzle body includes an outer surface with a fuel orifice fluidly coupled with the liquid fuel supply and the hydrogen fuel supply to emit at least one of the liquid fuel or the gaseous hydrogen fuel radially outward relative to the fuel nozzle assembly centerline.

The fuel nozzle assembly of any preceding clause, wherein the fuel orifice is arranged parallel to a radial direction relative to the fuel nozzle assembly centerline.

The fuel nozzle assembly of any preceding clause, wherein the fuel nozzle body includes: a center body, a first inner wall radially outward of the center body such that a first inner fluid passage is at least partially defined between the center body and the first inner wall, and a body wall radially outward of the first inner wall such that a second inner fluid passage is at least partially defined between the first inner wall and the body wall, the body wall including the outer surface.

The fuel nozzle assembly of any preceding clause, wherein the fuel nozzle assembly includes an outer wall coupled to and spaced radially outward from outer surface of the body wall to define an outer fluid passage.

The fuel nozzle assembly of any preceding clause, wherein the outer wall includes a plurality of outer wall fuel orifices arranged in an annular configuration, with outer wall fuel orifices of the plurality of outer wall fuel orifices disposed at circumferential sides of the outer wall having relatively larger diameters, and outer wall fuel orifices of the plurality of outer wall fuel orifices disposed at radially inner portions and radially outer portions of the outer wall having relatively smaller diameters.

The fuel nozzle assembly of any preceding clause, wherein the plurality of outer wall fuel orifices is arranged in an alternating pattern with at least some of the plurality of outer wall fuel orifices fluidly coupled with the liquid fuel supply and adjacent outer wall fuel orifices of the plurality of outer wall fuel orifices fluidly coupled with the hydrogen fuel supply.

The fuel nozzle assembly of any preceding clause, wherein the fuel orifice is disposed at or downstream of an outlet of the outer fluid passage.

The fuel nozzle assembly of any preceding clause, wherein the fuel nozzle assembly includes a mixer coupled to the outer wall.

The fuel nozzle assembly of any preceding clause, wherein the mixer includes a radial swirler.

The fuel nozzle assembly of any preceding clause, wherein the fuel nozzle assembly includes a first axial swirler in the first inner fluid passage and a second axial swirler in the second inner fluid passage.

The fuel nozzle assembly of any preceding clause, wherein the fuel nozzle assembly includes a third axial swirler in the outer fluid passage.

The fuel nozzle assembly of any preceding clause, wherein the mixer includes a mixer wall that extends in an axial direction of the fuel nozzle assembly; and wherein the fuel orifice is directed at the mixer wall.

## Claims

1. A gas turbine engine (10), comprising:
a compressor section (12), a combustion section (14), and a turbine section (16) in a serial flow arrangement, with the combustion section (14) comprising:
a combustor liner (40) that at least partially defines a combustion chamber (50); and
a fuel nozzle assembly (248, 448, 648), comprising:
a liquid fuel supply (34) to supply a liquid fuel;
a hydrogen fuel supply (36) to supply a gaseous hydrogen fuel; and
a fuel nozzle body (249, 449, 649) defining a fuel nozzle assembly centerline, the fuel nozzle body (249, 449, 649) fluidly coupled with the liquid fuel supply (34) and the hydrogen fuel supply (36) to provide the liquid fuel and
the gaseous hydrogen fuel to the combustion chamber (50);
wherein the fuel nozzle body (249, 449, 649) includes a body wall (304, 504, 704) including an outer surface (306, 506, 706) with a first fuel orifice (356, 556, 756) to emit the gaseous hydrogen fuel radially outward and including an inner surface (307, 507, 707) with a second fuel orifice (356, 556, 756) to emit at least one of the gaseous hydrogen fuel or the liquid fuel radially inward.

2. The gas turbine engine of claim 1, wherein the fuel nozzle assembly (248, 448, 648) includes an outer wall (308, 508, 708) radially outward of the body wall (304, 504, 704), and the first fuel orifice (356, 556, 756) is angled radially outward and aft to emit the gaseous hydrogen fuel toward the outer wall (308, 508, 708), into the combustion chamber (50), or both.

3. The gas turbine engine of any preceding claim, wherein the second fuel orifice (356, 556, 756) is angled radially inward and aft to emit the at least one of the gaseous hydrogen fuel or the liquid fuel into the combustion chamber (50).

4. The gas turbine engine of any preceding claim, wherein the first fuel orifice (356, 556, 756) is disposed at a trailing edge of the body wall (304, 504, 704).

5. The gas turbine engine of any preceding claim, wherein the fuel nozzle assembly (248, 448, 648) includes an outer wall (308, 508, 708) coupled to and spaced radially outward from the outer surface of the body wall (304, 504, 704) such that an outer fluid passage (324, 524, 724) is at least partially defined between the outer surface (306, 506, 706) of the body wall (304, 504, 704) and the outer wall (308, 508, 708).

6. The gas turbine engine of claim 5, wherein the first fuel orifice (356, 556, 756) is disposed to emit the at least one of the liquid fuel or the gaseous hydrogen fuel into air in or emitted from the outer fluid passage (324, 524, 724).

7. The gas turbine engine of any preceding claim, wherein the fuel nozzle body (249, 449, 649) includes:
a center body (300, 500, 700),
a first inner wall (302, 502, 702) radially outward of the center body (300, 500, 700), and
a second inner wall (310, 510, 710) radially outward of the first inner wall (302, 502, 702).

8. The gas turbine engine of claim 7, wherein the first inner wall (302, 502, 702) is radially outward of the center body (300, 500, 700) such that a first inner fluid passage (320, 520, 720) is at least partially defined between the center body (300, 500, 700) and the first inner wall (302, 502, 702); and
wherein the second inner wall (310, 510, 710) is radially outward of the first inner wall (302, 502, 702) such that such that a second inner fluid passage (322, 522, 722) is at least partially defined between the first inner wall (302, 502, 702) and the second inner wall (310, 510, 710), and such that a third inner fluid passage (326, 526, 726) is at least partially defined between the second inner wall (310, 510, 710) and the body wall (304, 504, 704).

9. The gas turbine engine of claim 8, wherein the fuel nozzle assembly (248, 448, 648) includes a first swirler (340, 540, 740) disposed in the first inner fluid passage(320, 520, 720), a second swirler (342, 542, 742) disposed in the second inner fluid passage(322, 522, 722), and a third swirler (342, 542, 742) disposed in the third inner fluid passage (326, 526, 726).

10. The gas turbine engine of any of claims 7 to 9, wherein the center body (300, 500, 700) includes a center body fuel orifice (352, 552, 752) fluidly coupled with the liquid fuel supply (34) and the hydrogen fuel supply (36).

11. The gas turbine engine of claim 10, wherein the first inner wall (302, 502, 702) includes a first inner wall fuel orifice (354, 554, 754) fluidly coupled with the hydrogen fuel supply (36).

12. The gas turbine engine of claim 11, wherein the second inner wall (310, 510, 710) includes a second inner wall fuel orifice (360, 560, 760) fluidly coupled the hydrogen fuel supply (36).

13. The gas turbine engine of claim 11 or 12, wherein the first fuel orifice (356, 556, 756) is aft of the center body fuel orifice (352, 552, 752).

14. The gas turbine engine of claim 13, wherein the first inner wall fuel orifice (354, 554, 754) is aft of the center body fuel orifice (352, 552, 752) and forward of the first fuel orifice (356, 556, 756).

15. The gas turbine engine of any of claims 11 to 14, wherein the first inner wall fuel orifice (354, 554, 754) is angled radially outward and aft relative to the fuel nozzle assembly centerline.
